# EUROPEAN PATENT APPLICATION

(11) **EP 1 688 848 A1**
(43) Date of publication of application: **09.08.2006**
(21) Application number: 04793230.6
(22) Date of filing: 29.10.2004
(51) Int. Cl.: G06F 17/21

(54) **DATA PROCESSING DEVICE, DATA PROCESSING METHOD, AND DATA PROCESSING PROGRAM**

(30) Priority: 31.10.2003 JP 2003373213; 26.03.2004 JP 2004093023
(71) Applicant: SHARP KABUSHIKI KAISHA, Osaka-shi, Osaka 545-8522 (JP)
(72) Inventor: CHIBA, Masahiro, Funabashi-shi, Chiba 2730005 (JP); UEDA, Hirotaka, Midori-ku, Chiba-shi, Chiba 2660011 (JP); MATSUBARA, Takanobu, 2850811 (JP)
(74) Representative: Brown, Kenneth Richard
(86) International application number: PCT/JP2004/016122
(87) International publication number: WO 2005/043405

(57) **Abstract**

There is provided a data processing device capable of easily creating a message based on a received message by the same procedure or configuration used when the message was created. Template data includes a display area and a creation area. When the data processing device displays a message from the template data, the display area is extracted and used. When the data processing device creates a message based on the template data, the creation area is extracted and used. The display area, the creation area and the message are transmitted to another device. On the reception side of the message, an operation area is extracted, and another message data can be easily created with the same operation used when the received message was created.

## Description

### Technical Field

The invention relates to a data processing device, a data processing method and a data processing program, and particularly to a data processing device, a data processing method and a data processing program that can create, transmit and receive message data.

### Background Art

According to widespread use of communication devices such as cellular phones, communication for transmitting and receiving created message data between one and another users has been spreading. Since performance of the cellular phones and the like have recently been improved, it becomes possible to perform communication by creating, transmitting and receiving messages that include a plurality of media data such as text, image, sound and movie, or include layouts and reproduction/display timing of these media data.

In general, the above kind of messages are complicated, and therefore are difficult to create. For overcoming the difficulty, such a manner is generally employed that a template for creating a message is used, and the message can be created easily only by specifying required media data such as text, image, sound and/or movie.

For example, patent reference 1 has disclosed an e-mail (electronic mail) creating method as a method of easily creating an e-mail and multimedia information attached thereto. More specifically, the patent reference 1 has described an e-mail creating method in which a mail template describing a plurality of content data and layout information of each content data is prepared, and a desired content data is selected from the plurality of content data to create a multimedia mail from the selected content data according the layout information of the mail template.

However, even when a message receiver who received the above multimedia mail as a message likes the received message, and wishes to create a similar message or to use an original template of this message for easily creating another message, information of the template is not present in the received message, and this results in a problem that the receiver must separately obtain the template from a message creator, or must be taught a provider or a manner for obtaining the template.

For obtaining a problem similar to the above, a patent reference 2 has disclosed a data providing method and a data obtaining method. More specifically, the patent reference 2 has disclosed the data providing method in which a template image including an inset image (an image, e.g., for advertisement in the embodiment) is prepared, and a creator or user creates a message by specifying and insetting an image onto an inset image in the template image, and transmits the data thus created. When a receiver intends to reuse this template, the receiver removes the image designated by the creator (thereby, the inset image such as an advertisement image appears), and insets the image designated by the receiver onto the inset image so that a message can be created and transmitted to a third party.
Patent reference 1: Japanese Patent Laying-Open No. 2002-324036
Patent reference 2: Japanese Patent Laying-Open No. 2002-189666

### Disclosure of the Invention

### Problems to be Solved by the Invention

As described above, the template is generally used for easily creating a messages, but this results in a problem that the receiver receiving the message cannot easily create the message based on the received message by a procedure or a configuration similar to that used for creating the received message. For overcoming this problem, the receiver must obtain separately the template from a message creator or must be taught a provider or a manner for obtaining the template at expense in time and effort.

In the manner disclosed in the patent reference 2, the template image including the inset image can be reused for distribution as described above. However, the template image does not include creation supporting information for facilitating creation of the message, i.e., information such as time information and layout information for reproducing media data as well as instructions for functions to be started for editing media data. This results in a problem that it is impossible to distribute the method in which the message can be easily created based on the received message by a procedure or a configuration similar to that used for creating the received message.

The invention has been developed in view of the above problems, and it is an object of the invention to provide a data processing device, a data processing method and a data processing program which allow easy creation of a message based on a received message by a procedure or a configuration similar to that used for creating the received message.

### Means for Solving the Problems

For achieving the above object, a data processing device according to an aspect of the invention includes a first data reading unit for reading template data including a message data creation supporting area for creating message data and a message display area for displaying the message data, a message data creation supporting area determining unit determining the message data creation supporting area included in the template data, and a message data editing unit editing the message data by using data in the message data creation supporting area.

Preferably, the message data creation supporting area includes at least one of media data to be reproduced in the message data, layout information for reproducing the media data, information indicating timing of reproduction of the media data, information indicating editable media data among the media data, information specifying a function to be started for editing the media data and data of guidance being effective when creating the message data.

Preferably, the function to be started for editing the media data is provided from a different device and can be used by accessing the different device.

Preferably, the template data is data described with tags, and the layout information for reproducing the media data, the information indicating timing of reproduction of the media data, the information indicating the editable media data among the media data, the information specifying the function to be started for editing the media data and the data of guidance being effective when creating the message data are described for determination according to the tags or attributes of the tags. The message data creation supporting area determining unit determines the tags or the attributes of the tags to discriminate at least one of the layout information for reproducing the media data, the information indicating timing of reproduction of the media data, the information indicating the editable media data among the media data, the information specifying the function to be started for editing the media data and the data of guidance being effective when creating the message data, and thereby determines the message data creation supporting area included in the template data.

It is also preferable that the template data is data described using tags, the tags include a tag indicating the message data creation supporting area, and the message data creation supporting area determining unit uses the tag indicating the message data creation supporting area to determine the message data creation supporting area included in the template data.

It is also preferable that the template data is data described using tags, the tags include a tag indicating an area other than the message data creation supporting area, and the message data creation supporting area determining unit uses the tag indicating the area other than the message data creation supporting area to determine the message data creation supporting area included in the template data.

Preferably, the template data further includes a template data provider information area bearing information specifying a provider of the template data.

Preferably, the template data includes template data component information indicating a location of at least one of the message data creation supporting area, the message data display area and the template data provider information area.

Further preferably, the template data component information is included in a header area of the template data, and the message data creation supporting area determining unit determines the message data creation supporting area included in the template data based on information included in the header area of the template data.

It is also preferable that the template data includes data formed of a plurality of file units, and the template data component information is one of the file units of data in the template data.

Preferably, the message display area includes at least one of media data to be reproduced in the message data, layout information for reproducing the media data, information indicating timing of reproduction of the media data, information indicating editable media data among the media data, information specifying a function to be started for editing the media data and data of guidance being effective when creating the message data.

Further preferably, the data processing device further includes a first message display area determining unit determining the message display area included in the template data, and the message data editing unit simultaneously edits the message display area when editing the message data.

Preferably, the message data editing unit edits the message data according to information in the message data creation supporting area determined by the message data creation supporting area determining unit, and creates the message data using the edited data and the information of the message display area.

Preferably, the message data editing unit creates the message data by adding the message data creation supporting area included in the read template data to the edited message display area.

Further preferably, the message data editing unit deletes at least one of the information indicating the editable information, the information specifying the function to be started for editing the media data and data of guidance being effective when creating the message data from the message display area when creating the message data.

Preferably, the message data editing unit creates the message data including information indicating a location of the message data creation supporting area in a header area.

Preferably, the data processing device further includes a communication unit for transmitting the created message data.

Preferably, the data processing device further includes a communication unit receiving the message data including the message display area for display on the reception side and the message data creation supporting area used for previous creation, a storing unit storing the received message data, a second data reading unit reading the stored message data, a second message display area determining unit determining the message display area included in the read message data and a message reproducing unit displaying and reproducing the message data by using the data in the message display area. The message data editing unit creates the message data while assuming that the read message data is the template data.

Preferably, the message data editing unit creates the message data further including a template ID identifying the template data, and storing the message data in the storing unit.

Preferably, the data processing device further includes a second data reading unit reading the message data stored in the storing unit, and a template determining unit determining the template data used creating the message data based on the template ID included in the read message data. The first data reading unit reads the determined template data, and the message data editing unit performs reedition of the message data read by the second data reading unit according to the information in the message data creation supporting area included in the template data.

According to another aspect of the invention, a data processing device includes a communication unit receiving message data including a message display area for display on a reception side and a message data creation supporting area used for previous creation, a storing unit storing the received message data, a data reading unit reading the stored message data, a message display area determining unit determining the message display area included in the read message data, a message reproducing unit displaying and reproducing the message data by using the data in the message display area, and a template data writing unit writing the message data as template data.

According to still another aspect of the invention, a data processing device includes a communication unit receiving message data including a message display area for display on a reception side and a message data creation supporting area used for previous creation, a storing unit storing the received message data, a data reading unit reading the stored message data, a message display area determining unit determining the message display area included in the read message data, a message reproducing unit displaying and reproducing the message data by using the data in the message display area, a message data creation supporting area determining unit determining the message data creation supporting area included in the message data, and a template data writing unit writing the message data as the template data using data in the determined message data creation supporting area.

Preferably, the message data creation supporting area includes at least one of media data to be reproduced in the message data, layout information for reproducing the media data, information indicating timing of reproduction of the media data, information indicating editable media data among the media data, information specifying a function to be started for editing the media data and data of guidance being effective when creating the message data.

Further preferably, the function to be started for editing the media data is provided from a different device and can be used by accessing the different device.

Preferably, the message data is data described with tags, and the layout information for reproducing the media data, the information indicating timing of reproduction of the media data, the information indicating the editable media data among the media data, the information specifying the function to be started for editing the media data and the data of guidance being effective when creating the message data are described for determination according to the tags or attributes of the tags. The message data creation supporting area determining unit determines the tags or the attributes of the tags to discriminate at least one of the layout information for reproducing the media data, the information indicating timing of reproduction of the media data, the information indicating the editable media data among the media data, the information specifying the function to be started for editing the media data and the data of guidance being effective when creating the message data, and thereby determines the message data creation supporting area included in the message data.

It is also preferable that the message data is data described using tags, the tags include a tag indicating the message data creation supporting area, and the message data creation supporting area determining unit uses the tag indicating the message data creation supporting area to determine the message data creation supporting area included in the message data.

Alternatively, it is preferable that the message data is data described using tags, the tags include a tag indicating an area other than the message data creation supporting area, and the message data creation supporting area determining unit uses the tag indicating the area other than the message data creation supporting area to determine the message data creation supporting area included in the message data.

Preferably, the message display area includes information instructing access to a different device, and the message reproducing unit accesses the different device to display data obtained by the accessing when the information instructing the access to the different device is included.

According to yet another aspect of the invention, a data processing device includes a communication unit receiving message data including a message display area for display on a reception side and a template data provider information area describing information specifying a provider of template data used for previous creation, a storing unit storing the received message data, a data reading unit reading the stored message data, a message display area determining unit determining the message display area included in the read message data, a message reproducing unit displaying and reproducing the message data by using the data in the message display area, a template data provider determining unit determining a provider of the template data used creating the message data by using the data in the template data provider information area, a template data obtaining unit obtaining the template data from the provider, and a message data creating unit creating the message data by using the obtained template data.

According to a further aspect of the invention, a data processing device includes a communication unit receiving message data including a message display area for display on a reception side and a template data ID describing information identifying template data used for previous creation, a storing unit storing the received message data, a data reading unit reading the stored message data, a message display area determining unit determining the message display area included in the read message data, a message reproducing unit displaying and reproducing the message data by using the data in the message display area, a template data determining unit determining the template data used creating the message data based on the template data ID included in the read message data, a template data obtaining unit obtaining the determined template data when the determined template data is obtainable, and a message data creating unit creating the message data by using the obtained template data.

According to a further aspect of the invention, a data processing device includes a communication unit receiving message data including a message display area for display on a reception side and a template data ID describing information identifying template data used for previous creation, a storing unit storing the received message data, a data reading unit reading the stored message data, a message display area determining unit determining the message display area included in the read message data, a message reproducing unit displaying and reproducing the message data by using the data in the message display area, a template ID transmitting unit transmitting the template data ID included in the read message data to a different device, a template data obtaining unit obtaining the template data determined based on the template ID as the template data used creating the message data from the different device, and a message data creating unit creating the message data by using the obtained template data.

Preferably, the message data includes message data component information indicating a location of at least one of the message data creation supporting area, the message data display area and the template data provider information area.

Further preferably, the message data component information is included in a header area of the message data, and the message data creation supporting area determining unit determines the message data creation supporting area included in the message data based on information included in the header area of the message data.

It is also preferable that the message data includes data formed of a plurality of file units, and the message data component information is the data of one of the file units in the message data.

According to a further aspect of the invention, a data processing device includes a data receiving unit receiving message data including a message display area for display by a terminal on a reception side, a message data creation supporting area used for previous creation and an identifier of the terminal on the reception side, an identifier extracting unit extracting the identifier of the terminal on the reception side included in the received message, a storing unit storing a table determining a correspondence between the identifiers of the terminals and processing capabilities, a processing capacity determining unit determining the processing capacity corresponding to the extracted identifier of the terminal with reference to the table, a data editing unit editing the message data according to the determined capacity, and a data transmitting unit transmitting the edited data.

According to a further aspect of the invention, a data processing method includes a data reading step of reading template data formed of a message data creation supporting area for creating message data and a message display area for displaying the message data, a message data creation supporting area determining step of determining the message data creation supporting area included in the template data, and a message data editing step of editing the message data by using data in the message data creation supporting area. The message data editing step creates the message data including the message data creation supporting area included in the read template data.

According to a further aspect of the invention, a data processing method includes a receiving step of receiving message data including a message display area for display on a reception side and a message data creation supporting area used for previous creation, a storing step of storing the received message data in a storing device, a data reading step of reading the message data stored in the storing device, a message display area determining step of determining the message display area included in the read message data, a message reproducing step of displaying and reproducing the message data by using the data in the message display area, and a template data writing step of writing the message data as template data.

According to a further aspect of the invention, a data processing method includes a receiving step of receiving message data including a message display area for display on a reception side and a message data creation supporting area used for previous creation, a storing step of storing the received message data in a storing device, a data reading step of reading the message data stored in the storing device, a message display area determining step of determining the message display area included in the read message data, a message reproducing step of displaying and reproducing the message data by using the data in the message display area, a message data creation supporting area determining step of determining the message data creation supporting area included in the message data, and a template data writing step of writing the message data as template data by using the data in the determined message data creation supporting area.

According to a further aspect of the invention, a data processing method includes a receiving step of receiving message data including a message display area for display on a reception side and a template data provider information area describing information specifying a provider of template data used for previous creation, a storing step of storing the received message data in a storing device, a data reading step of reading the message data stored in the storing device, a message display area determining step of determining the message display area included in the read message data, a message reproducing step of displaying and reproducing the message data by using the data in the message display area, a template data provider determining step of determining a provider of the template data used creating the message data by using the data in the template data provider information area, a template data obtaining step of obtaining the template data from the provider, and a message data creating step of creating the message data by using the obtained template data.

According to a further aspect of the invention, a data processing program causes a computer to execute data processing by executing a data reading step of reading template data formed of a message data creation supporting area for creating message data and a message display area for displaying the message data, a message data creation supporting area determining step of determining the message data creation supporting area included in the template data, and a message data editing step of editing the message data by using data in the message data creation supporting area. The message data editing step creates the message data including the message data creation supporting area included in the read template data.

According to a further aspect of the invention, a data processing program causes a computer to execute data processing by executing a receiving step of receiving message data including a message display area for display on a reception side and a message data creation supporting area used for previous creation, a storing step of storing the received message data in a storing device, a data reading step of reading the message data stored in the storing device, a message display area determining step of determining the message display area included in the read message data, a message reproducing step of displaying and reproducing the message data by using the data in the message display area, and a template data writing step of writing the message data as template data.

According to a further aspect of the invention, a data processing program causes a computer to execute data processing by executing a receiving step of receiving message data including a message display area for display on a reception side and a message data creation supporting area used for previous creation, a storing step of storing the received message data in a storing device, a data reading step of reading the message data stored in the storing device, a message display area determining step of determining the message display area included in the read message data, a message reproducing step of displaying and reproducing the message data by using the data in the message display area, a message data creation supporting area determining step of determining the message data creation supporting area included in the message data, and a template data writing step of writing the message data as template data by using the data in the determined message data creation supporting area.

According to a further aspect of the invention, a data processing program causes a computer to execute data processing by executing a receiving step of receiving message data including a message display area for display on a reception side and a template data provider information area describing information specifying a provider of template data used for previous creation, a storing step of storing the received message data in a storing device, a data reading step of reading the message data stored in the storing device, a message display area determining step of determining the message display area included in the read message data, a message reproducing step of displaying and reproducing the message data by using the data in the message display area, a template data provider determining step of determining a provider of the template data used creating the message data by using the data in the template data provider information area, a template data obtaining step of obtaining the template data from the provider, and a message data creating step of creating the message data by using the obtained template data.

### Brief Description of the Drawings

Fig. 1 illustrates a structure of a data communication system of an embodiment.
Fig. 2 is a block diagram illustrating a specific example of a hardware structure of cellular phone 1 that is a reproducing/editing device included in the data communication system.
Fig. 3 illustrates specific examples of configurations of respective programs stored in a storing unit 130 of cellular phone 1.
Fig. 4 illustrates a functional configuration of a reproducing/editing engine program.
Fig. 5 schematically illustrates a data structure of template data.
Fig. 6 illustrates an example of specific template data.
Fig. 7 illustrates an example of specific template data.
Fig. 8 illustrates a specific example of a table defining correspondence between start functions and guidances to be displayed.
Fig. 9 is a flowchart illustrating processing of reproducing and editing template data in cellular phone 1.
Fig. 10 illustrates a specific example of a media reproduction processing time table representing timing of execution of reproduction processing.
Fig. 11 illustrates a specific example of a start function time table representing timing of start functions to be started according to the times when respective events occur.
Fig. 12 illustrates a specific example of a guidance display time table representing timing of display of guidance.
Fig. 13 is a flowchart illustrating processing according to events to be executed in step S18.
Fig. 14 is a flowchart illustrating application execution processing in step S25.
Fig. 15 is a flowchart illustrating application execution processing in step S25.
Fig. 16 illustrates a specific example of rewritten template data.
Fig. 17 illustrates a specific example of rewritten template data.
Fig. 18 illustrates a specific example of changes that occur on a screen during processing of reading template data.
Fig. 19 illustrates specific examples of a screen image displayed when respective functions start and the data is edited.
Fig. 20 illustrates a specific example of a structure of message data written by message data write processing of a first specific example.
Fig. 21 illustrates a specific example of a structure of message data written by message data write processing of a second specific example.
Fig. 22 illustrates a modification of a reproducing/editing program.
Fig. 23 is a flowchart including processing of temporarily storing message data in addition to processing in the flowchart of Fig. 13.
Fig. 24 illustrates a fourth specific example of a structure of message data.
Fig. 25 is a flowchart including processing of reediting message data in addition to processing in the flowchart of Fig. 9.
Fig. 26 specifically illustrates a portion determined as a message area in message data.
Fig. 27 illustrates a specific example of a time table prepared by a time managing unit 1314 of a second embodiment.
Fig. 28 is a flowchart illustrating a flow of event processing in a View mode of the second embodiment.
Fig. 29 illustrates a specific example of changes on a screen of cellular phone 1.
Fig. 30 illustrates a specific example of changes on the screen of cellular phone 1.
Fig. 31 illustrates another specific example of template data.
Fig. 32 illustrates still another specific example of template data.
Fig. 33 illustrates functions that can be executed when message data is obtained by accessing an EC site.
Fig. 34 illustrates functions than can be executed after selecting Reuse.
Fig. 35 illustrates further another specific example of template data.
Fig. 36 illustrates further another specific example of template data.
Fig. 37 illustrates a reproducing/editing program corresponding to the case where message data including a template ID is received.
Fig. 38 illustrates processing of creating message data.
Fig. 39 illustrates processing of browsing and creating message data.
Fig. 40 illustrates a specific example of a data structure of template data.
Fig. 41 illustrates a specific example of a data structure of template data.
Fig. 42 illustrates a structure of a message server 3.
Fig. 43 illustrates an example of message data received by message server 3.
Fig. 44 illustrates an example of message data obtained after message server 3 edited the message data illustrated in Fig. 43.
Fig. 45 illustrates another example of message data obtained after message server 3 edited the message data illustrated in Fig. 43.

### Description of the Reference Signs

1: cellular phone, 2: template providing server, 3: message server, 110: communication unit, 120: control unit, 130: storing unit, 131, 1310, 1330: reproducing/editing engine program, 132: UI display program, 133: image-taking program, 134: image data displaying/reproducing program, 135: sound data reproducing program, 136: sound data recording program, 137: movie/animation data displaying/reproducing program, 138: text data displaying/reproducing program, 139: text editing program, 140: input/output unit, 142: key-code input device, 144: display, 146: microphone, 148; speaker, 149: camera, 150: GPS, 151: WWW browser program, 152: mail program, 153: speech communication program, 154: location obtaining program, 155: address book program, 156: file obtaining program, 157: various-data storing unit, 310: data receiving unit, 320: terminal processing capacity determining unit, 321: processing capacity table storing unit, 322: terminal address extracting unit, 330: data editing unit, 340: data transferring unit, 1311: data reading unit, 1312: syntax analyzing unit, 1313: execution control unit, 1314: time managing unit, 1315: event managing unit, 1316: reproduction data writing unit, 1317: message data writing unit, 1318: template data writing unit, 1319: message data reading unit, 1320, 1331: template determining unit, 1332: template obtaining unit

### Best Modes for Carrying Out the Invention

Embodiments of the invention will now be described with reference to the drawings. In the following description, the same parts and components bear the same reference numbers and the same names, and achieve the same functions. Therefore, description thereof is not repeated.

### [First Embodiment]

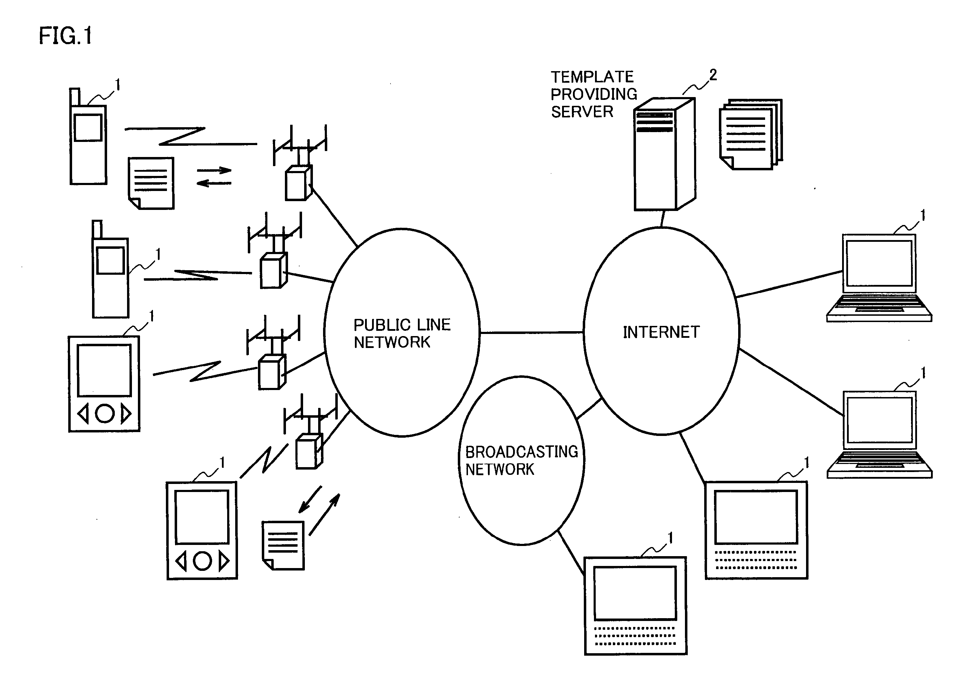

Fig. 1 illustrates a structure of a data communication system of a first embodiment. Referring to Fig. 1, the data communication system of the embodiment includes a template providing server (which will be merely referred to as a "server" hereinafter) 2 providing template data and a reproducing/editing device 1 reproducing and editing the provided template. Server 2 and reproducing/editing device 1 performs communications via the Internet, public line network or broadcasting network. Although not shown in Fig. 1, server 2 and reproducing/editing device 1 may perform the communications via dedicated lines such as a LAN (Local Area Network), or may perform wireless communications. As shown in Fig. 1, reproducing/editing device 1 corresponds to devices such as a cellular phone, PDA (Personal Digital Assistant), personal computer, television set and facsimile that have a function of transmitting and/or receiving data. In the following description, reproducing/editing device 1 is a cellular phone 1.

The "template data" generally represents data described in a data-description language such as XML (eXtensible Markup Language), XHTML (eXtensible HyperText Markup Language), SMIL (Synchronized Multimedia Integration Language) or SVG (Scalable Vector Graphics). The template data may be data that includes reproducible data (which will be referred to as "reproduction data" hereinafter") and is described in the above data-description language, may be data that includes information described in a data-description language and indicating data to be reproduced as well as the reproduction data. The data-description language may include a script language such as ECMAScript or Java (registered trademark) for describing motion or interactivity. The template data may not include the reproduction data, but may be configured such that information representing the data to be reproduced contains information of a link to reproduction data. Owing to this data structure, reproducing/editing device 1 can reproduce and edit the template data. In this embodiment, the template data is script data forming reproducible or editable multimedia content data, and represents one of forms of data expressed in a script description format that allows addition of arbitrary multimedia data to the script in question by user's operations

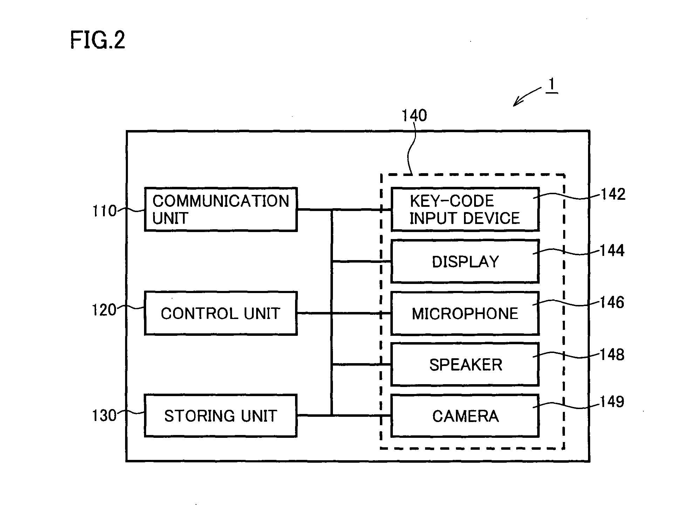

Fig. 2 illustrates a specific example of a hardware structure of cellular phone 1 which is the reproducing/editing device included in the data communication system.

Referring to Fig. 2, cellular phone 1 included in the data communication system of the embodiment is formed of an input/output unit 140 forming an interface to a user, a control unit 120 formed of a CPU (Central Processing Unit) and others for entirely controlling cellular phone 1, a communication unit 110 for communication with another device and a storing unit 130 which is formed of a ROM (Read Only Memory), a RAM (Random Access Memory) and others for storing programs to be executed by control unit 120, intermediate data of the programs, data received from other computers and the like.

Input/output unit 140 described above includes a key-code input device 142 including numeric buttons of "1", "2" and others as well as direction buttons of "R", "L" and others, a display 144 such as an LCD (Liquid Crystal Display) displaying information to users, a microphone 146 for sound input, a speaker 148 for sound output and a camera 149 for taking and inputting images.

Control unit 120 internally has a timer.

In cellular phone 1, the processing of reproducing and editing the template which is obtained by the user from server 2 is achieved by template data and software which is stored in storing unit 130 and is implemented by control unit 120. Operations of cellular phone 1 in itself illustrated in Fig. 2 are well known, and therefore are not specifically described herein.

Server 2 included in the data communication system is a server built with a conventional personal computer and others, and specific structures are not described herein.

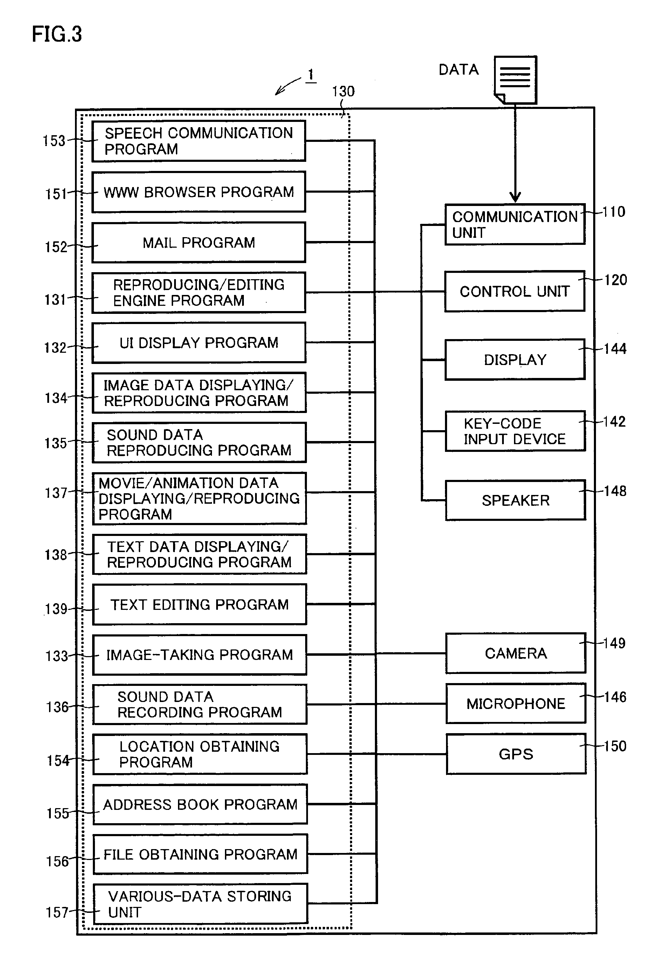

Referring to Fig. 3, specific examples of structures of respective programs stored in storing unit 130 of cellular phone 1 will now be described, and a flow of data processing in cellular phone 1 will also be described. The data processing illustrated in Fig. 3 is achieved in cellular phone 1 by executing the respective programs stored in storing unit 130 by control unit 120. More specifically, the template data received by communication unit 110 from server 2 is reproduced and edited by executing the programs stored in storing unit 130 by control unit 120.

More specifically, referring to Fig. 3, control unit 120 first executes a reproducing/editing engine program 131 to process the template data received by communication unit 110. Functional structures of reproducing/editing engine program 131 will be described later.

Based on a result of processing by reproducing/editing engine program 131, control unit 120 executes a UI (User Interface) content display program 132. By executing UI content display program 132 and processing the template data, contents of the UI in the template data are displayed on display 144.

Control unit 120 executes an image-taking program 133 based on the result of the processing by reproducing/editing engine program 131, and thereby operates to accept an image provided from camera 149 and various instructions provided from key-code input device 142. When taking a movie, control unit 120 also operates to accept a sound inputted through microphone 146.

Based on the result of the processing by reproducing/editing engine program 131, control unit 120 also executes an image data displaying/reproducing program 134 to display the image data included in the template data on display 144. When the image data includes a sound, speaker 148 is controlled to reproduce the sound.

Based on the result of the processing by reproducing/editing engine program 131, control unit 120 further executes a sound data display reproducing program 135 to reproduce the sound data included in the template data by speaker 148.

Based on the result of the processing by reproducing/editing engine program 131, control unit 120 further executes a sound data recording program 136 to accept the sound inputted via microphone 146 and various instructions provided from key-code input device 142.

Based on the result of the processing by reproducing/editing engine program 131, control unit 120 further executes a movie/animation data displaying/reproducing program 13 7 to reproduce movie or animation data included in the template data on display 144.

Based on the result of the processing by reproducing/editing engine program 131, control unit 120 further executes a text data displaying/reproducing program 138 to reproduce text data included in the template data on display 144.

Based on the result of the processing by reproducing/editing engine program 131, control unit 120 further executes a text editing program 139 to accept text information and various instructions provided from key-code input device 142.

Based on the result of the processing by reproducing/editing engine program 131, control unit 120 further executes a WWW (World Wide Web) browser program 151 to reproduce WWW contents.

Based on the result of the processing by reproducing/editing engine program 131, control unit 120 further executes a WWW browser program 151 to obtain data from server 2 through communication unit 110.

Based on the result of the processing by reproducing/editing engine program 131, control unit 120 further executes a mail program 152 to accept text information and various instructions provided from key-code input device 142 and transmit a mail.

Based on the result of the processing by reproducing/editing engine program 131, control unit 120 further executes a speech communication program 153 to start speech communication.

Based on the result of the processing by reproducing/editing engine program 131, control unit 120 further executes a position obtaining program 154 to obtain a current position of the terminal in question from a GPS (Global Positioning System) 150.

Based on the result of the processing by reproducing/editing engine program 131, control unit 120 further executes an address book program 155 to obtain mail addresses and telephone numbers stored in storing unit 130.

Based on the result of the processing by reproducing/editing engine program 131, control unit 120 further executes a file obtaining program 157 to obtain content data stored in storing unit 130.

Based on the result of the processing by reproducing/editing engine program 131, control unit 120 further operates to store data in various-data storing unit 157 when required.

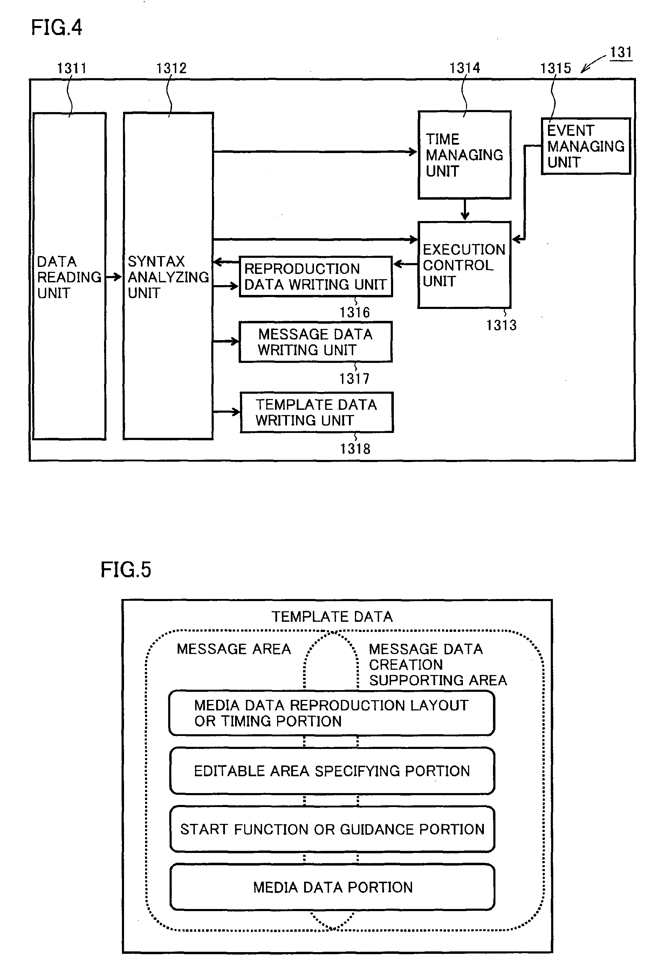

Fig. 4 illustrates functional structures of reproducing/editing engine program 131 described above. Control unit 120 executes reproducing/editing engine program 131 stored in storing unit 130, and thereby cellular phone 1 achieves various functions illustrated in Fig. 4.

Referring to Fig. 4, a data reading unit 1311 first reads the template data which is received by communication unit 110 and is stored in various-data storing unit 157. Data reading unit 1311 passes the read template data to a syntax analyzing unit 1312.

Then, syntax analyzing unit 1312 analyzes the syntax of template data provided from data reading unit 1311, and provides the data to be used by reproducing/editing engine program 131 to a data writing unit 1316 for writing it. Also, it provides the message data included in the template data to a message data writing unit 1317 and a template data writing unit 1318. Further, syntax analyzing unit 1312 provides the results of analysis to an execution control unit 1313 and a time managing unit 1314.

Based on the result of analysis provided from syntax analyzing unit 1312, time managing unit 1314 creates a time table. Time managing unit 1314 provides the time table thus created to execution control unit 1313.

Event managing unit 1315 detects occurrence of an event. Event managing unit 1315 provides a result of the detection to execution control unit 1313.

Then, execution control unit 1313 executes the processing for achieving the display/reproduction of the reproduction data based on the time table provided from time managing unit 1314, the result of detection of event occurrence provided from event managing unit 1315 and the analysis result provided from event managing unit 1315. Also, based on the result of detection of event occurrence provided from event managing unit 1315, execution control unit 1313 instructs reproduction data writing unit 1316 to rewrite the reproduction data.

Based on the instruction from execution control unit 1313, reproduction data writing unit 1316 rewrites the reproduction data, and provides the rewritten reproduction data to execution control unit 131. Execution control unit 1313 executes the rewritten reproduction data.

Message data writing unit 1317 writes out the message data provided from syntax analyzing unit 1312. Template data writing unit 1318 performs the syntax analysis on the message data provided from syntax analyzing unit 1312 to write the template data that can be reused for message creation. The processing in template data writing unit 1318 will be described in detail in connection with a second embodiment.

The first embodiment is described in connection with the case of processing the template data provided from server 2 by cellular phone 1. However, the template data may be stored in storing unit 130 of cellular phone 1, in which case various portions in Figs. 3 and 4 process the template data which is obtained by reading it from storing unit 130.

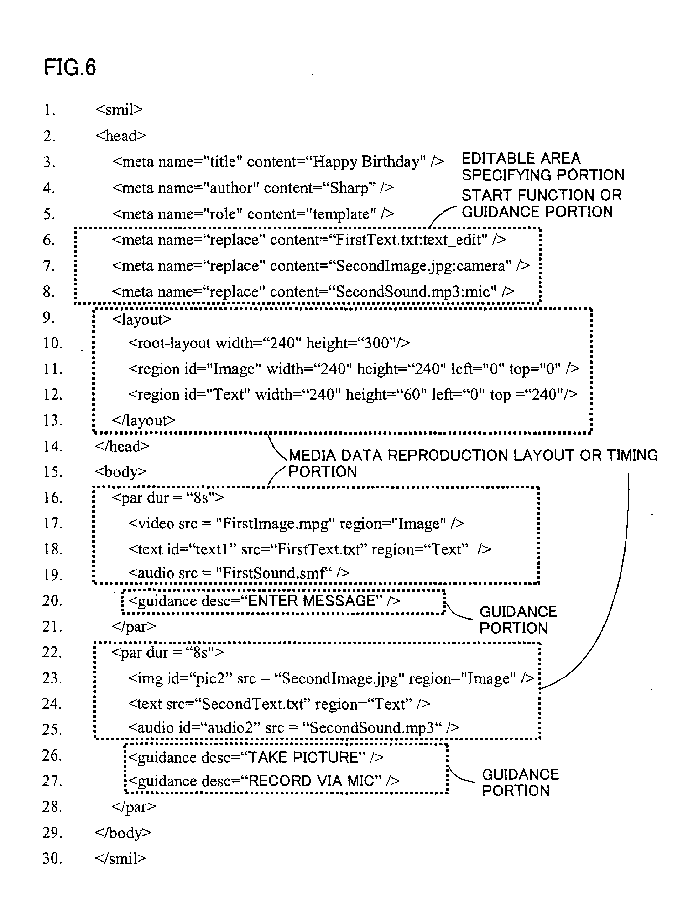

The template data that is provided from server 2 to cellular phone 1 and is processed by cellular phone 1 of the embodiment will now be described with reference to Fig. 5. Fig. 5 schematically shows a structure of the template data, and more specifically shows the structure of the template data for creating and transmitting the message data by cellular phone 1. Referring to Fig. 5, the template data processed by cellular phone 1 of the embodiment has a specific feature that it includes a message area and a message data creation supporting area.

The message area displays contents of a message which will be displayed on the receiver side when the message is created and transmitted using this template data. Thus, the message area includes media data (indicated by "MEDIA DATA" in Fig. 5) such as image (still image) data, movie data, sound data, music data, text data and animation data, and also includes a description of a media data reproduction layout or timing (indicated by "MEDIA DATA REPRODUCTION LAYOUT OR TIMING PORTION" in Fig. 5). The message area may include a start function for starting predetermined functions, e.g., of starting a WWW browser and displaying a specified page, and may also include a guidance portion, i.e., information for displaying a guidance informing the receiver side of the fact that such functions are available (thess are indicated by "START FUNCTION OR GUIDANCE PORTION" in Fig. 5).

The message data creation supporting area displays contents that are displayed on the creator side when creating the message with this template data. For displaying, on a creation device, information that is as close to message contents displayed on the receiver side as possible or information facilitating imagination of created message contents when creating the message, the message data creation supporting area usually includes the media data (indicated by "MEDIA DATA" in Fig. 5) such as image (still image) data, movie data, sound data, music data, text data and animation data, and also includes the description of media data reproduction layout or timing (indicated by "MEDIA DATA REPRODUCTION LAYOUT OR TIMING PORTION" in Fig. 5). The media data included in the message data creation supporting area as well as the media data reproduction layout or timing may be the same as those in the message area, or may be different therefrom.

The message data creation supporting area may include the start functions that are used when creating the message as well as the guidance portion, i.e., information for displaying the guidance informing the creator of the fact that such functions are available (these are indicated by "START FUNCTION OR GUIDANCE PORTION" in Fig. 5). Usually, the start function or the guidance portion included in the message data creation supporting area are different from those included in the message area. This is because the functions and information required when creating the message are different from those required when reading or viewing the received message. However, when the substantially same functions are to be used for creating the message and for browsing the received message, the same data may be employed. When the user is allowed to edit only a predetermined portion of the message data, the message data creation supporting area further includes an editable area specifying portion. The editable area specifying portion is used for the purpose of simplifying the message creation by restricting the editable area, or is conversely used for the purpose of specifying uneditable portions for copyright protection or the like.

As described above, the template data includes the layout information or reproduction timing of the media data, the designation of the editable media data, the function to be started for media data edition or the guidance effective for message data creation, and the media data to be reproduced, whereby the more complicated manner of viewing the message can be designated.

Fig. 5 illustrates a specific example of the structure of the template data, and message data writing unit 1317 writes the message data having substantially the same structure as that illustrated in Fig. 5. More specifically, owing to the fact that the template data has the above data structure, the template data can serve as a template achieving the function of message creation and as a message displaying the message contents.

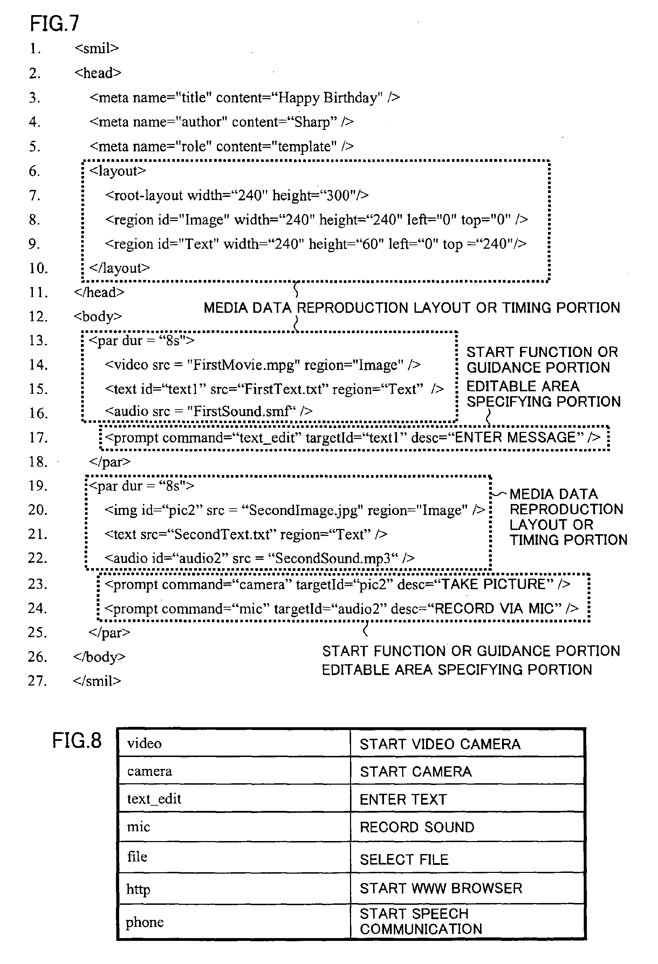

Figs. 6 and 7 illustrate specific examples of the template data. These template data are primarily described, by way of example, in the SMIL format, but may be described in another data description language such as XML, XHTML, SMIL or SVG as already described. Also, the script language such as ECMAScript or Java (registered trademark) may be used. For the sake of simplicity, the media data portion illustrated in Fig. 5 is not included in this example, but the actual template data naturally includes the data representing contents thereof

Referring to Fig. 6, in a header (2nd to 14th lines) of the template data, the 3rd line specifies a title of the template data, the fourth line specifies a creator of the template data and the 5th line specifies that this data is the template data.

The 6th - 8th lines specify the editable area and the function to be started for creation. The 6th line specifies that text data "FirstText.txt" is replaced, and that the function to be started for it is a text editor "text_edit". Likewise, the 7th line specifies that image data "SecondImage.jpg" is replaced, and that the function to be started for it is camera "camera". Likewise, the 8th line specifies that sound data "SecondSound.mp3" is replaced, and that the function to be started for it is microphone "mic".

The 9th - 13th lines represent a layout formed of an image area "Image" and a text area "Text".

A body portion in and after the 15th line specifies the media data to be displayed in each of the above areas as well as the timing of such display. More specifically, the 16th - 21 st lines define the media data to be reproduced simultaneously. Further specifically, the 17th - 19th lines specify the media data ("FirstImage.mpg", "FirstText.txt" and "FirstSound.smf") to be reproduced, and the 16th line specifies the time (8 seconds) of the reproduction.

Further, the 20th line specifies the guidance giving a tip on the message creation. Since the 18th line specifies that the text data "FirstText.txt" to be replaced is displayed, the guidance indicating that this text message can be replaced may be displayed according to the same timing as the display of the text data, and this offers an effect of facilitating the message creation by the user. Therefore, the 20th line specifies that the guidance "ENTER MESSAGE" is displayed.

Although the use of <guidance> has been described as an example of the manner of specifying the guidance, another manner may be employed. For example, a <text> tag in the 18th line may contain the data of guidance contents. Alternatively, the description of the guidance contents may not be contained in the template data, and the reproducing/editing engine program 131 may be configured to determine the optimum guidance. More specifically, the 6th and 18th lines specify that the text data "FirstText.txt" is replaced and that the text editor is started, and also specify the timing of display of this text data. As shown in Fig. 8, therefore, the following configuration may be employed. Storing unit 130 of cellular phone 1 stores in advance a table defining a correspondence between the start functions and the guidances to be displayed at the time for the start, and control unit 120 of cellular phone 1 performs the control such that this table is automatically read when executing the reproducing/editing engine program 131, and the guidance "ENTER TEXT" corresponding to the start function "text_edit" is displayed according to the same timing as the display of the text data. Control unit 120 of cellular phone 1 may perform control to display an appropriate guidance based on the determination that "FirstText.txt" is text data, even when the start function is not specified.

Likewise, the 22nd - 28th lines define the media data to be reproduced simultaneously. More specifically, the 23rd - 25th lines specify the media data ("SecondImage.jpg", "SecondText.txt" and "SecondSound.mp3") to be reproduced, and the 22nd line specifies the time (8 seconds) of the reproduction. The 26th and 27th lines specify the guidance giving a tip on the message creation. Description relating to the guidance is substantially the same as that in the 20th line.

Further, Fig. 7 illustrates a specific example of the template data, which is different from that of the template data illustrated in Fig. 6. Although Fig. 7 illustrates by way of example the template data described in a description rule different from that illustrated in Fig. 6, the data that is read and executed by reproducing/editing engine program 131 illustrated in Fig. 4 is the same as that in Fig. 6.

Referring to Fig. 7, the contents in the 3rd - 5th lines in the header (2nd - 11th lines) of the template data are substantially the same as those in the template data illustrated in Fig. 6. The contents in the 6th - 10th lines are substantially the same as those in the 9th - 13th lines in the template data illustrated in Fig. 6.

A body portion in and after the 12th line describes the media data displayed in the respective areas as well as the reproduction timing thereof, using substantially the same tags as those in the body portion of the template data illustrated in Fig. 6. Specifically, the 13th - 18th lines define the media data to be reproduced simultaneously. More specifically, the 14th - 16th lines specify the media data ("FirstMovie.mpg". "FirstText.txt" and "FirstSound.smf") to be reproduced, and the 13th line specifies the time (8 seconds) of production.

Further, the 15th line defines an id attribute. An id attribute defined in the 15th line is combined with the target ID attribute of a <prompt> tag in the 17th line to allow designation of the editable media data. Thus, it is represented that a target ID "text1" of the <prompt> tag in the 17th line indicates that an src attribute in the tag (<text> tag in the 15th line) having the id attribute matching with the above target ID can be edited by starting the command specified by the command attribute in the <prompt> tag.

As described above, the 17th row specifies the function to be started as well as the data that can be edited by the started function and, at the same time, specifies the guidance giving a tip on the message creation. Since the 15th line specifies that the text data "FirstText.txt" to be replaced is displayed, the guidance indicating that this text message can be replaced is displayed according to the same timing as the display of the text data, and this offers the effect of facilitating the message creation by the user. Therefore, the 17th line specifies that the guidance "ENTER MESSAGE" is displayed.

Although the use of the desc attribute has been described as an example of the manner of specifying the guidance, another manner may be employed. For example, a <text> tag in the 15th line may contain the data of guidance contents. Alternatively, the description of the guidance contents may not be contained in the template data, and the reproducing/editing engine program 131 may be configured to determine the optimum guidance. More specifically, the 15th and 17th lines specify that the text data "FirstText.txt" is replaced and that the text editor is started, and also specify the timing of display of this text data. As shown in Fig. 8, therefore, the following configuration may be employed. Storing unit 130 of cellular phone 1 stores in advance a table defining a correspondence between the start functions and the guidances to be displayed at the time for the start, and control unit 120 of cellular phone 1 performs the control such that this table is automatically read when executing the reproducing/editing engine program 131, and the guidance "ENTER TEXT" corresponding to the start function "text_edit" is displayed according to the same timing as the display of the text data. Control unit 120 of cellular phone 1 may perform control to display an appropriate guidance based on the determination that "FirstText.txt" is text data, even when the start function is not specified.

Likewise, the 19th - 25th lines define the media data to be reproduced simultaneously. More specifically, the 20th - 22nd lines specify the media data ("SecondImage.jpg", "SecondText.txt" and "SecondSound.mp3") to be reproduced, and the 19th line specifies the time (8 seconds) of the reproduction. The 23rd and 24th lines specify the function to be started, the description specifying the tag to be editable and the guidance giving a tip on the message creation. Description relating to them is substantially the same as that in the 17th line.

In this embodiment, description will be given on the case where cellular phone 1 processes the template data in a human-readable text format. However, the template data may be in a binary format not allowing direct reading by a human.

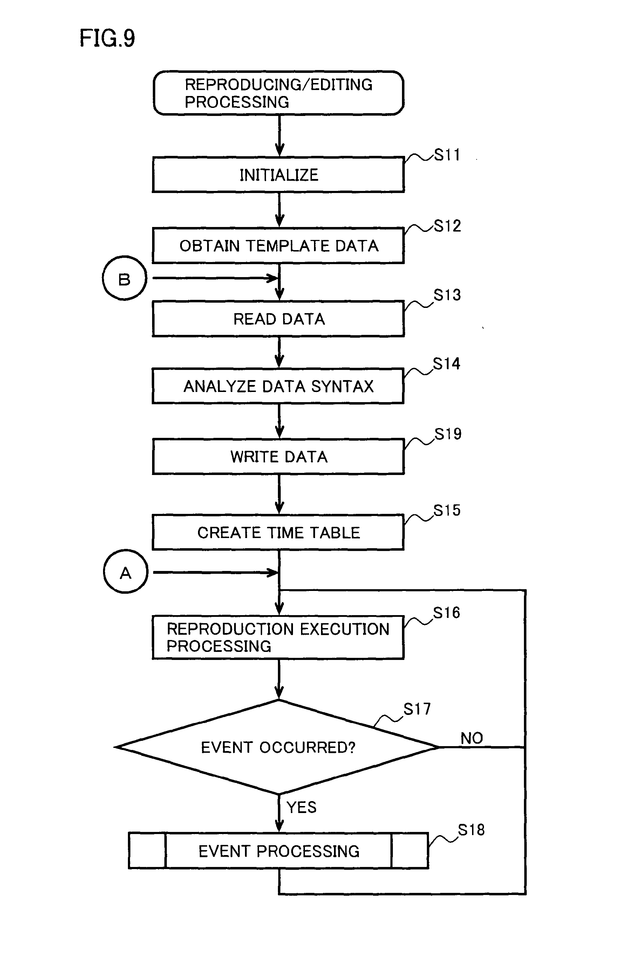

The processing of reproducing and reediting the template data by cellular phone 1 of the embodiment will now be described with reference to a flowchart of Fig. 9. The processing illustrated by the flowchart of Fig. 9 is implemented by control unit 120 of cellular phone 1, and particularly by reading and executing reproducing/editing engine program 131 having the configuration in Fig. 4 and stored in storing unit 130.

Referring to Fig. 9, initialization is first executed in step S11, and then communication unit 110 obtains the template data over the Internet from template providing server 2 in step S12.

In step S13, control unit 120 executes reproducing/editing engine program 131 to read the obtained template data by data reading unit 1311.

In subsequent step S14, syntax analyzing unit 1312 analyzes the syntax of the template data. The invention does not restrict the manner of analyzing the syntax, and general syntax analyzing methods may be selected according to the used data description languages.

The template data processed by cellular phone 1 of the embodiment has a distinctive feature that it is formed of the message area and the message data creation supporting area described before As described before, the message area represents contents of the message that is displayed on the receiver side when the message is created and transmitted using this template data. Also, the message data creation supporting area represents contents displayed on the creator side when creating the message with this template data. Therefore, the message creation supporting area is determined in step S14.

In the following description, reproduction data writing unit 1316 writes out, as the reproduction data, the same contents as those of the read template data. When performing the syntax analysis on the template data in step S14, it is unconditionally determined that the whole data read by data reading unit 1311 corresponds to the message creation supporting area and, in step S19, reproduction data writing unit 1316 writes out the same contents as the read template data in step S19. However, this is merely an example. In practice, the media data reproduction layout or the timing portion is required for determining the actual manner or state in which the created message is displayed, but is not essential for the message creation so that only the editable area specifying portion as well as the start function or guidance portion may be read and used in step S14.

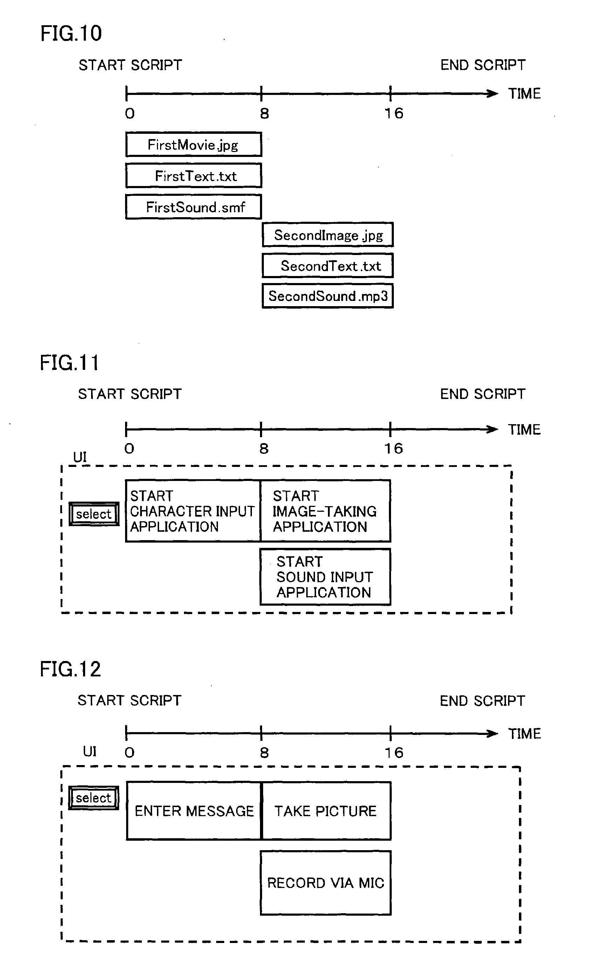

Further, in step S15 subsequent to the syntax analysis in step S14, time managing unit 1314 creates time tables illustrated in Figs. 10 - 12 based on the result of syntax analysis. The time table created when processing the template illustrated in Fig. 6 is the same as that created when processing the template data illustrated in Fig. 7.

More specifically, Fig. 10 illustrates a specific example of the media reproduction processing time table that represents the timing of effecting the reproduction production on the media created based on the template data illustrated in Figs. 6 and 7. During first eight seconds, the image data "FirstMovie.mpg", text data "FirstText.txt" and sound data "FirstSound.smf" are reproduced in parallel, and the image data "SecondMovie.mpg", text data "SecondText.txt" and sound data "SecondSound.smf" are reproduced in parallel during next eight seconds.

Fig. 11 illustrates a specific example of the start function time table representing timing of starting the start function according to the time at which event occurred. In this example, the occurred event is an operation of a Select key by the user, and Fig. 11 illustrates the following operations. When the user operates the Select key during first eight seconds, the character input application, i.e., text editing program 139 starts. When the user operates the Select key during next eight seconds, display 144 displays a screen image for selecting the image-taking application, i.e., image-taking program 133 or the sound-input application, i.e., sound data recording program 136, and the selected program starts.

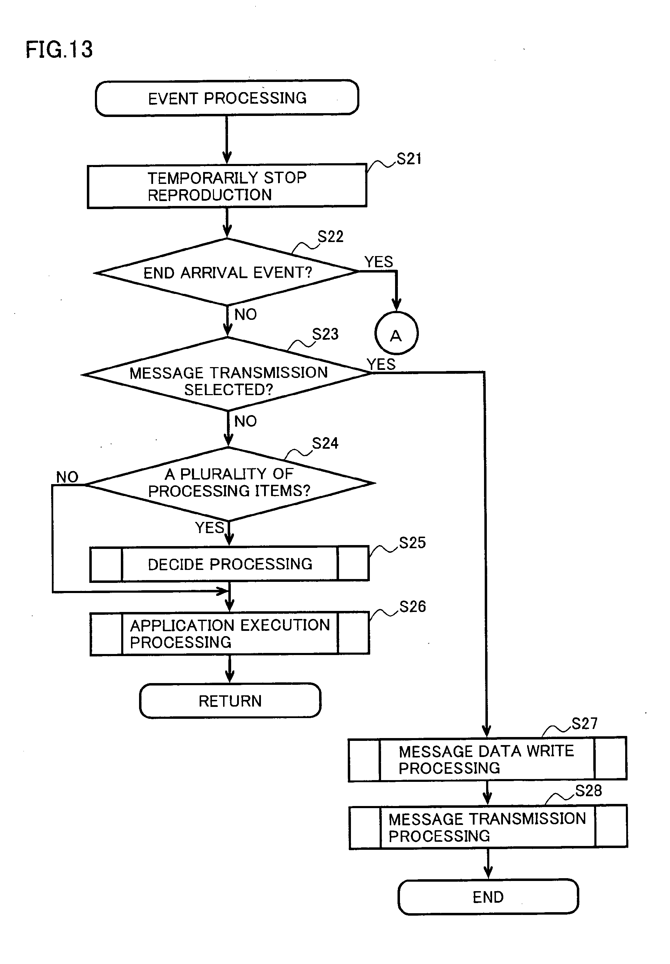

Fig. 12 illustrates a specific example of the guidance display time table representing the timing of displaying the guidance. When the user operates the Select key during the first eight seconds, display 144 displays "ENTER MESSAGE" as an explanation of the Select key for informing the user of that the character input application, i.e., text editing program 139 will start. When the user select the Select key during the next eight seconds, display 144 displays, e.g., "TAKE PICTURE" and "RECORD VIA MIC" as an explanation of the Select key for informing the user of that the image-taking application, i.e., image-taking program 133 or the sound input application, i.e., sound data recording program 136 will start.

In next step S16, execution control unit 1313 performs the media reproducing processing based on the syntax analysis result and the time table illustrated in Fig. 10. In this operation, execution control unit 1313 performs the control using UI display program 132, and causes display 144 to display the user interface that changes with time of media reproduction, based on the guidance display time table illustrated in Fig. 12.

In step S17, event managing unit 1315 monitors occurrence of events. The events that may be detected in step S17 are, e.g., an end arrival event that the processing arrived at the end of the time table, an operation performed for instructing termination of the message creation when the user intends to transmit a message, and events (including the Select key operation) caused via key-code input device 142 used as the user interface for starting the function illustrated in Fig. 11. When the occurrence of event is detected in step S17 (YES in S17), execution control unit 1313 executes the processing according to the event in step S18.

The reproducing processing in step S16 as well as the reproducing and editing processing included in the processing corresponding to the event in step S18 may be interrupted by a speech communication program during the processing, or may be interrupted due to user's reason or battery exhaustion. In view of these cases, such configuration is preferable that processing is interrupted after storing unit 130 stores the time points in the reproduction and edition as well as the state the changes, and the processing will be resumed by reading the time points in the reproduction and edition as well as the state the changes from storing unit 130 so that the processing can restart from the reproduction and edition before the interruption.

The processing according to the event executed in step S18 will now be described with reference to a flowchart of Fig. 13.

Referring to Fig. 13, when information indicating the detection of event occurrence is received from event managing unit 1315 in above step S17, execution control unit 1312 temporarily stops the time table that is being executed in step S21. Based on the detection information received in step S17, processing is performed to determine the event of which occurrence is detected. When the event indicates the arrival at the end of the time table (YES in S22), the processing returns to step S16 in Fig. 9. Thus, the processing returns to the start of the time table. However, the processing may be configured to terminate the reproduction after repeating the above processing one or a predetermined number oftime(s).

When the event detected in step S17 is an operation for instructing the termination of the message creation, e.g., for transmitting the message (YES in S23), the message write processing is performed in step S27 using the data written by reproduction data writing unit 1316 and/or the template data read from data reading unit 1311, and specifically, message data writing unit 1317 writes out the message data to be subjected to the syntax analysis by syntax analyzing unit 1312 and then to be transmitted. The message data write processing in step S27 will be described later.

In step S28, the message written in step S27 is transmitted, and the processing ends. The processing of message transmission in step S28 is usually executed by starting mail program 152 through control unit 120 and using the mail transmission function of the mail program.

When the event that occurred in step S22 is neither an event indicating the arrival at the end of the time table nor an operation for instructing the termination of the message creation (NO in S22 and NO in S23), processing determined corresponding to the event is executed in steps S24 - 525. More specifically, when the Select key is operated and thus an event occurs, the program to be started corresponding to the time of the operation is extracted based on the time table in Fig. 11. When a plurality of programs are extracted for start in step S24, decision processing is performed in step S25 for deciding the program to be actually started. More specifically, execution control unit 1313 displays a screen image for selection on display 144 or the like for accepting the selection of the processing to be actually started among these processing items. For example, when occurrence of the event of the Select key operation is detected after ten seconds from the start of reproduction, the processing can be selected from the plurality of items, i.e., start of the image-taking application and start of the sound input application as illustrated in Fig. 11 so that display 144 displays the user interface for selection of "TAKE IMAGE" or "INPUT SOUND" in step S25. Alternatively, display 144 may display "TAKE PHOTOGRAPH" or "RECORD WITH MIC.", i.e., the user interface specified by the time table in Fig. 12. The decision of the start function in step S25 may be performed in another manner, and the invention does not restrict the manner. Application execution processing in step S26 executes the function decided in step S25.

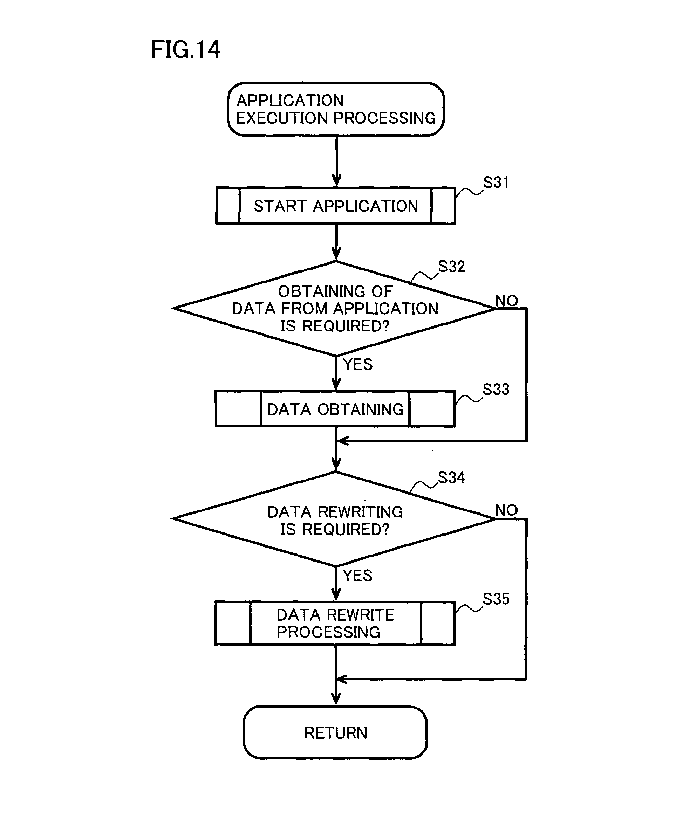

The foregoing application execution processing in step S25 will now be described with reference to Fig. 14.

Referring to Fig. 14, execution control unit 1313 first starts the application specified in steps S23 - S24. When predetermined data is to be obtained from the started application (YES in S32), it is obtained in step S33. When the current data in question is to be rewritten (YES in S34), reproduction data writing unit 1316 executing the rewriting of data in step S35.

In connection with the template data of the format illustrated in Fig. 6, the application started in step S31 corresponds to "text_edit", "camera" and "mic" specified with the content attributes in the 6th - 8th lines. In connection with the template data of the format illustrated in Fig. 7, it corresponds to the applications specified with the command attributes in the <prompt> tags in the 17th, 23rd and 24th lines. These are primarily determined in view of processing of starting the text editor for entering a text and replacing it with original data, in view of starting the camera to take an image and replace the original image with it or in view of starting the microphone to input a sound and replace the original data with it. Therefore, the data obtained in step S33 includes a file name of the obtained media data and a body or content of the media data. Thus, the data rewrite processing in step S35 is performed on the template data of the format illustrated in Fig. 6 by changing the portions specifying file paths corresponding to the content attributes in the 6th - 8th lines, portions specifying file paths in the 18th, 24th and 25th lines, and contents of the respective files.

In another processing manner, only the contents of the media data may be taken out in step S33. Thus, it is merely required to prepare data having different contents without changing the file name, in which case the file path is not changed in step S35, and it is merely required to change the contents of the file based on the data obtained in step S33.

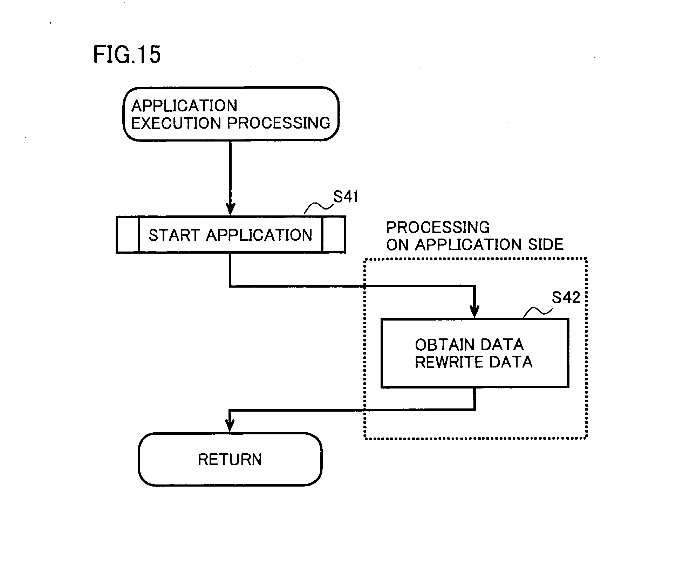

The processing illustrated in Fig. 14 is the application that is started during the event processing in step S18 of the reproducing/editing processing illustrated in Fig. 9, and this processing is configured to performed the data obtaining and the rewrite processing while the started application is being executed. However, the application thus started may obtain the data and may perform the rewrite processing. More specifically, the processing illustrated in Fig. 15 may be performed instead of the processing illustrated in Fig. 14. Fig. 15 illustrates the application execution processing, and is a flowchart illustrating processing different from that illustrated in Fig. 14.

In step S41 in Fig. 15, execution control unit 1313 starts the application specified in steps S23 - S24, and causes the started application to obtain the predetermined data in step S42. Thereafter, processing may be performed to replace the contents of the file specified by the corresponding file path in the content attributes indicated in the 6th - 8th lines in Fig. 6 and the contents of the file specified by the file path in the 18th, 24th and 25th lines with the obtained data. When the processing illustrated in Fig. 15 is executed, it is not necessary to start reproducing/editing engine program 131 and edit directly the data in contrast to the processing illustrated in Fig. 14.

The applications started in step S31 or S41 may include applications not aimed at obtaining the data or rewriting the data, and may include, e.g., an application of starting speech communication program 153 to make a call and an application of starting WWW browser program 151 to access a predetermined site. In this case, another processing may be performed without returning to step S16 in Fig. 9 for reproducing/editing processing after the application execution in step S25.

In the above processing, the application started in step S31 or S41 is the function such as the text editor, camera application or microphone application provided in cellular phone 1. However, the application started in step S31 and S41 may be the function provided in another device on a network, i.e., an external device of cellular phone 1. This kind of application can be executed by starting an application of accessing a service or the like providing data or function for supporting the message creation. More specifically, such a manner can be employed that the device accesses a function provided in another device (i.e., different device) on the network, and thereby obtains the media data or edits the media data using a function of processing the media data.

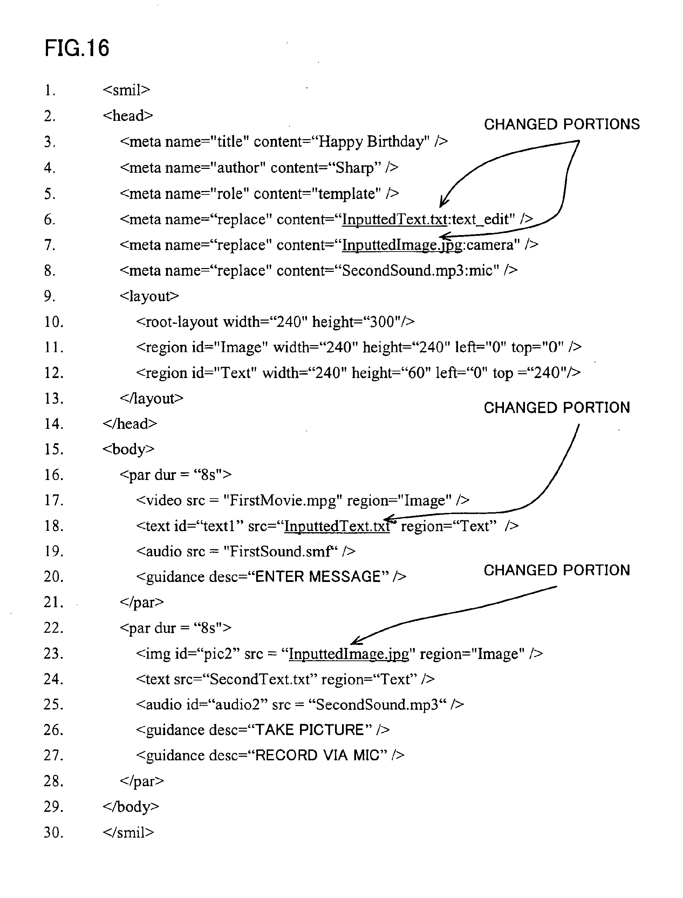

Fig. 16 illustrates a specific example of the template data that is rewritten as a result of the rewrite processing in step S35 or S42 already described. The template data illustrated in Fig. 16 is a specific example prepared by changing the template data illustrated in Fig. 6. Fig. 16 does not illustrate the media data portion for the sake of illustration, similarly to the case in Fig. 6.

The template data illustrated in Fig. 16 is prepared in view of the case where the Select key event occurs during 8 seconds after the start of reproduction of the template data illustrated in Fig. 6. More specifically, when the event occurs during reproduction of the template, the character input application starts according to the time table illustrated in Fig. 11, and obtains the text data entered by the user to create text data [InputText.txt]. The created text data is added to the media data portion of the reproduction data to change the file path "FirstText.txt" (6th and 18th lines) into "InputtedText.txt" as illustrated in Fig. 16. At the same time, the reproduction data "FirstText.txt" included in the template data in Fig. 6 is deleted.

The template data is illustrated in Fig. 16 in view of the case where the Select key event occurs during a period from 8 to 16 seconds after the start of reproduction of the template data illustrated in Fig. 6, and the sound input application is selected from a group including the image-taking application and the sound input application according to the time table illustrated in Fig. 11. In this case, the image data taken by the user is obtained to create the image data "InputtedImage.jpg". The created image data is added to the media data portion of the reproduction data, and the file paths "SecondImage.jpg" in the reproduction data (in the 7th and 23rd lines) are changed into "InputtedImage.jpg" as illustrated in Fig. 16. At the same time, the reproduction data "SecondImage.jpg" included in the template data in Fig. 6 is deleted.

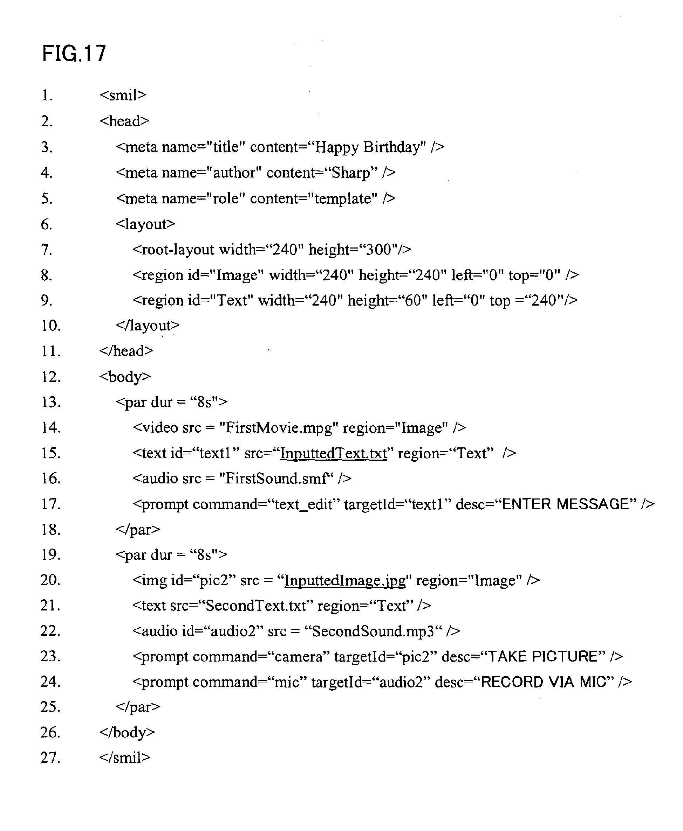

Further, Fig. 17 illustrates a specific example of rewriting into the template data in Fig. 7. Similarly to Fig. 7, Fig. 17 does not illustrate the media data portion for the sake of simplicity. The assumed user's operations are the same as those described with reference to Fig. 16.

During reproduction of the template data illustrated in Fig. 7, the text data entered by the user is obtained, and thereby the text data [InputText.txt] is created. The created text data is added to the media data portion of the reproduction data to change the file path "FirstText.txt" (15th line) into "InputtedText.txt" as illustrated in Fig. 17. At the same time, the reproduction data "FirstText.txt" included in the template data in Fig. 7 is deleted.

The template data is illustrated in Fig. 16 in view of the case where the Select key event occurs during a period from 8 to 16 seconds after the start of reproduction of the template data illustrated in Fig. 7, and the sound input application is selected from a group including the image-taking application and the sound input application according to the time table illustrated in Fig. 11. In this case, the image data taken by the user is obtained to create the image data "InputtedImage.jpg". The created image data is added to the media data portion of the reproduction data, and the file path "SecondImage.jpg" (in 20th line) of the reproduction data is changed into "InputtedImage.jpg" as illustrated in Fig. 17. At the same time, the reproduction data "SecondImage.jpg" included in the template data in Fig. 7 is deleted.

A flow of the processing that has been described will now be described further in connection with a specific example of changes on the screen.

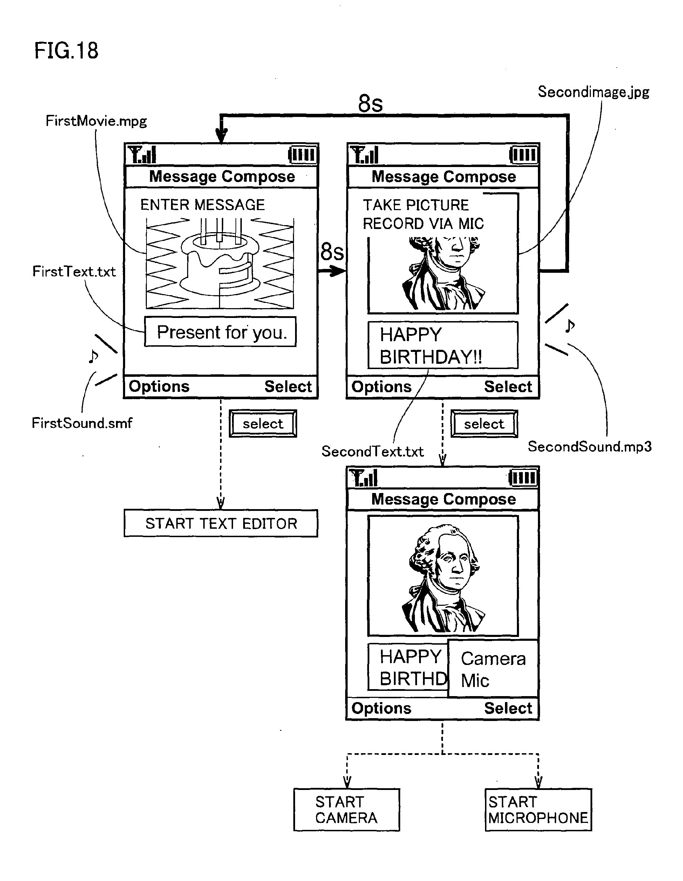

Fig. 18 illustrates a specific example of the changes that occurs on the screen when the read processing is being effected on the template data illustrated in Fig. 6 or 7.

Referring to Fig. 18, during first eight seconds (left portion in the figure) after the start of the read processing, operations are performed to reproduce the image data "FirstMovie.mpg", text data "FirstText.txt" and sound data "FirstSound.smf" as already described. During next eight seconds (right portion in the figure), operations are performed to display the image data "SecondImage.jpg", text data "SecondText.txt" and "SecondSound.mp3" according to the specified layout. During the first eight seconds, the guidance of "ENTER MESSAGE" is displayed. During the next eight seconds, the guidance of "TAKE PICTURE" and "RECORD VIA MIC" are displayed. The text editor starts in response to the touch of the Select key by the user during the first eight seconds. The camera or microphone starts in response to the touch of the Select key by the user during the next eight seconds. Before this start, the screen (lower right portion in the figure) displays contents for selecting the function to be started, and the selected function will start.

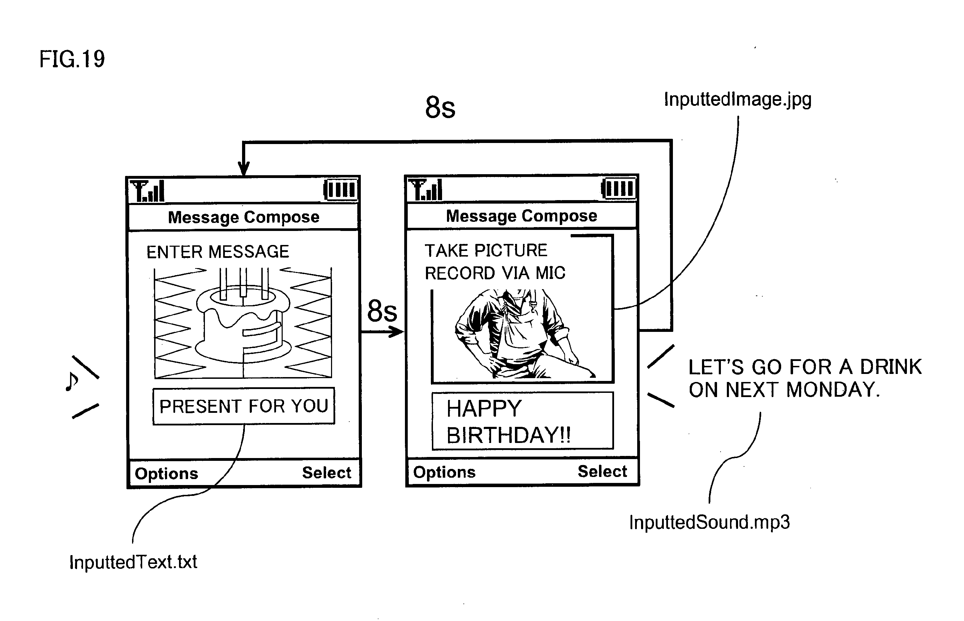

Fig. 19 illustrates a state in which the functions start and the data is edited. Referring to Fig. 19, the foregoing operation edits the text data in the template data displayed during the first eight seconds to display "PRESENT FOR YOU" (InputtedText.txt), and edits the photograph and sound displayed during the next eight seconds (InputtedImage.jpg and InputtedSound.mp3).

The template data thus changed is used for creating the message data by the message data write processing in step S27 of Fig. 13 when the user performs an instructing operation to terminate the message creation, e.g., of transmitting the message.

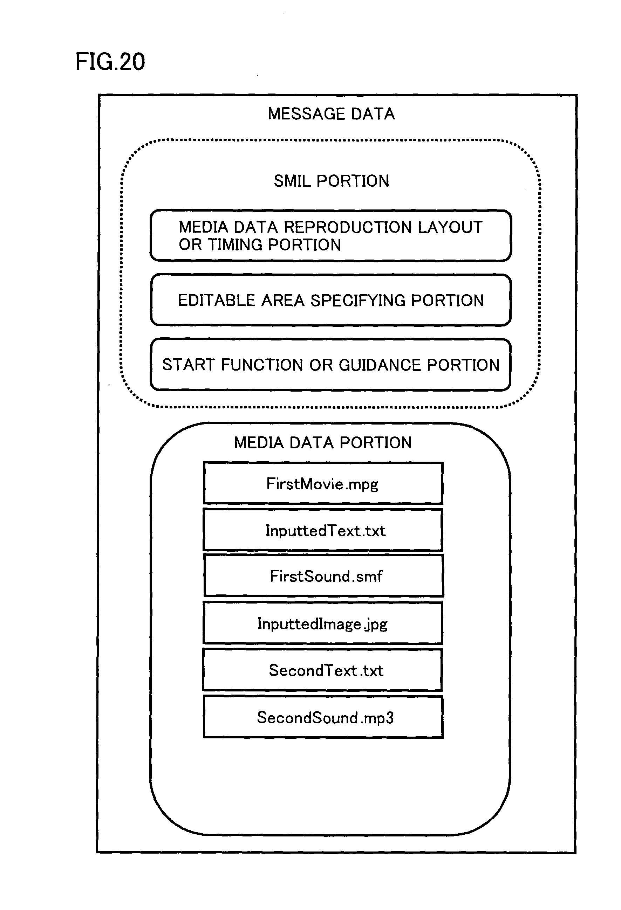

In a first specific example of the message data write processing in step S27, the template data thus edited in Fig. 16 or 17 is written as it is. Fig. 20 illustrates a specific example of the structure of the message data that is written by the message data write processing of the first specific example. Referring to Fig. 20, the text data "FirstText.txt" and image data "SecondImage.jpg" included in the initial template are deleted from the media data portion of the message data to be written, and the text data "InputtedText.txt" and image data "InputtedText.jpg" are added thereto.

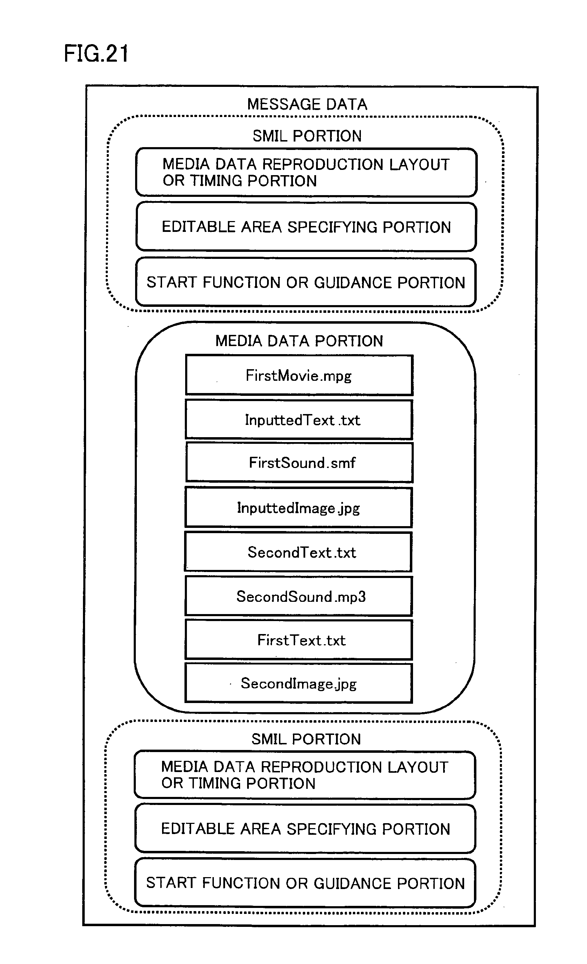

In a second specific example of the message data write processing in step S27, components included in the unedited template are added to the edited template data in Fig. 16 or 17. In the message data write processing of the second specific example, as illustrated in Fig. 21, the media data reproduction layout or the timing portion included in the unedited template data, the editable area specifying portion, and the start function or guidance portion illustrated in Fig. 6 or 7 are added to the template data edited as illustrated in Fig. 20. Also, the text data "FirstText.txt" and image data "SecondImage.jpg" included in the unedited template data are added to the media data portion.

In a third specific example of the message data write processing in step S27, the editable area specifying portion as well as the start function or guidance portion are deleted from the edited template data illustrated in Fig. 21. More specifically, a portion corresponding to the 6th - 8th lines in Fig. 16 and portions corresponding to the 20th line and the 26th - 27th lines are deleted from the edited template data illustrated in Fig. 21. This means that these portions are used for creating the message, and are not used as the message.

The message data thus created is transmitted in step S28, and the processing ends. Usually, control unit 120 starts mail program 152 to use the mail transmission function of the mail program, and thereby executes the message transmitting processing via communication unit 110.

A function of reediting the message data may be added to this embodiment. Usually, the mail program stores and manages the created message in a mail box or the like. For example, the message temporarily saved by the user during creation of the message is kept in a Draft box. The transmitted message is saved in a Send box. The saved message can be taken out from the box for reedition. This embodiment may have the above function of temporarily saving the message data and reediting the saved message as described below.

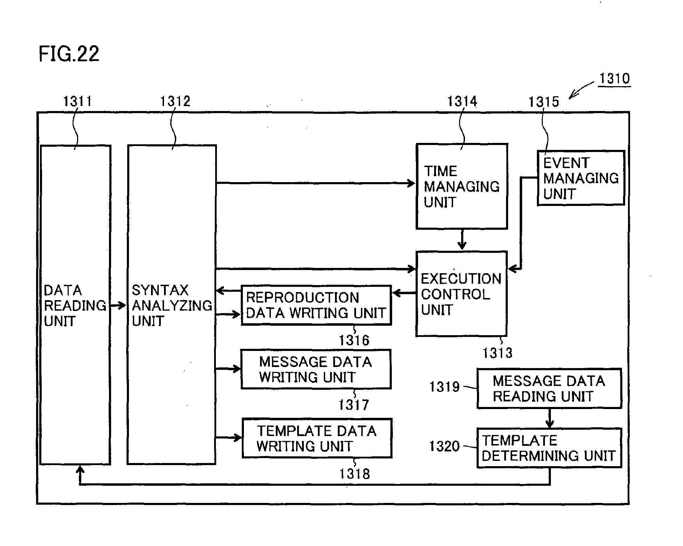

Fig. 22 illustrates a modification of the reproducing/editing program. Referring to Fig. 22, the reproducing/editing program 1310 in Fig. 22 includes a message data reading unit 1319 and a template determining unit 1320 in addition to reproducing/editing program 131 in Fig. 4.

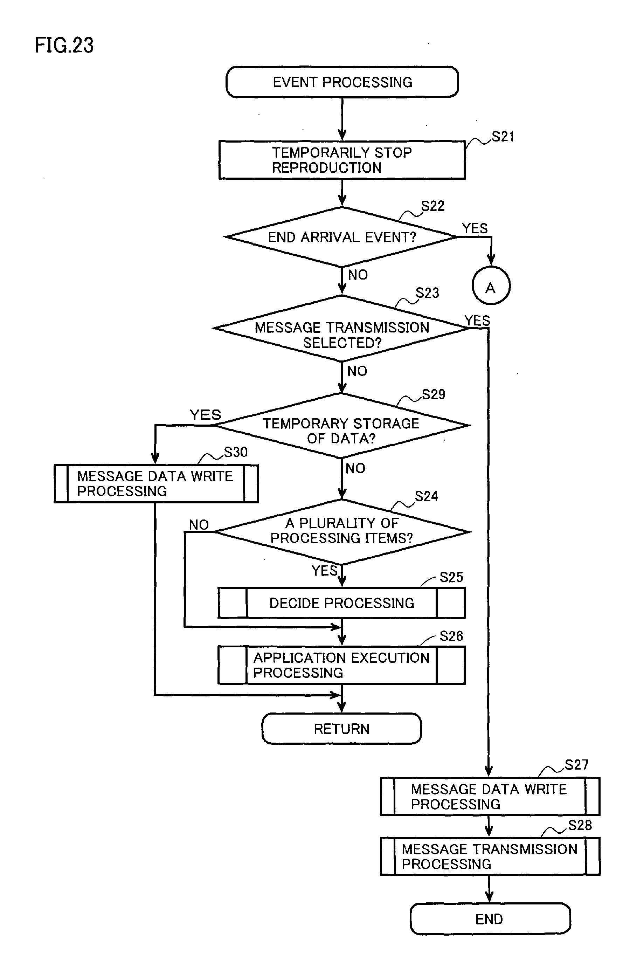

Fig. 23 is a flowchart including processing of temporarily saving the message data in addition to the processing of the flowchart in Fig. 13. Referring to Fig. 23, steps S29 and S30 are added to the steps in the flowchart of Fig. 13.

In step S29, the result is "YES" when the message data must be temporarily saved during the edition. For example, the result is "YES" when the user explicitly selects the temporary saving of the message data during edition thereof, when a program other than the program for the reproducing/editing processing starts, or when the system must be suspended for a certain reason.

When YES in step S29, message data writing unit 1317 writes the message data that is being edited into various-data storing unit 157 in step S30.

In addition to the first, second and third specific examples already described, a fourth specific example may be employed as an example of the message data write processing in step S30.

In the first and second specific examples already described, the written message includes the edited template data. Therefore, temporarily saved message data can be reedited by reading the temporarily saved message data and using the edited template data included in the read message data.

In the third specific example already described, the written message data does not include the "editable area specifying portion" and "start function or guidance portion" in the edited template data, but includes the unedited template data. Therefore, the temporarily saved message data can be reedited by reading the temporarily saved message data and using the unedited template data included in the read message data.

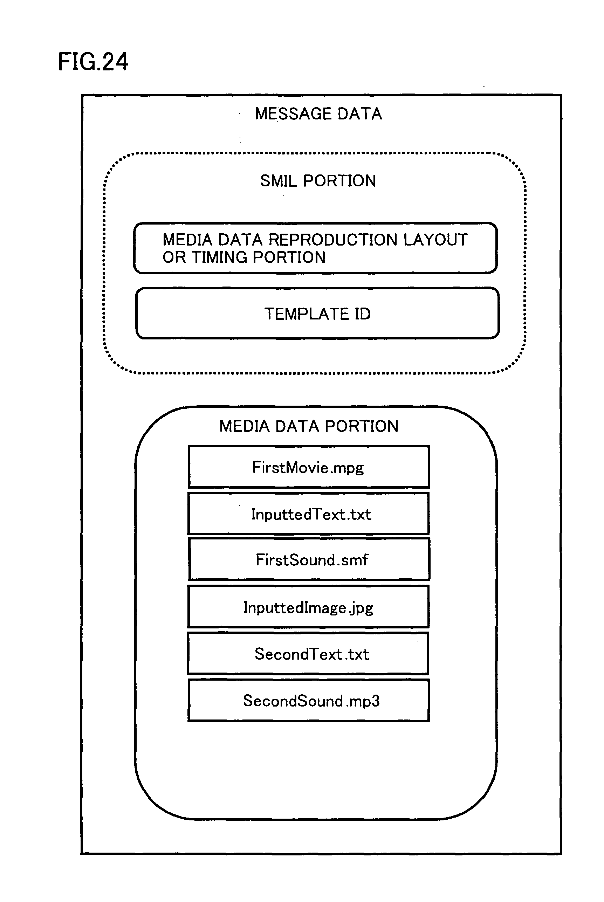

However, such a case may occur that the written message data does not include the "editable area specifying portion" and "start function or guidance portion" in the edited template data as well as the unedited template data. In this case, even when the temporarily saved message data is read, the read message data cannot be reedited because there is no information of the "editable area specifying portion" and "start function or guidance portion". In the fourth specific example, therefore, the message data including the template ID is written as illustrated in Fig. 24. The template ID may be an ID described in the original template data, or may be an ID that was assigned for identifying the template data when communication unit 110 obtained the template data. Also, the template ID may be a value that was set for identifying the template data when data reading unit 1311 read the template data. Further, the provider of the template may be used as the template ID.

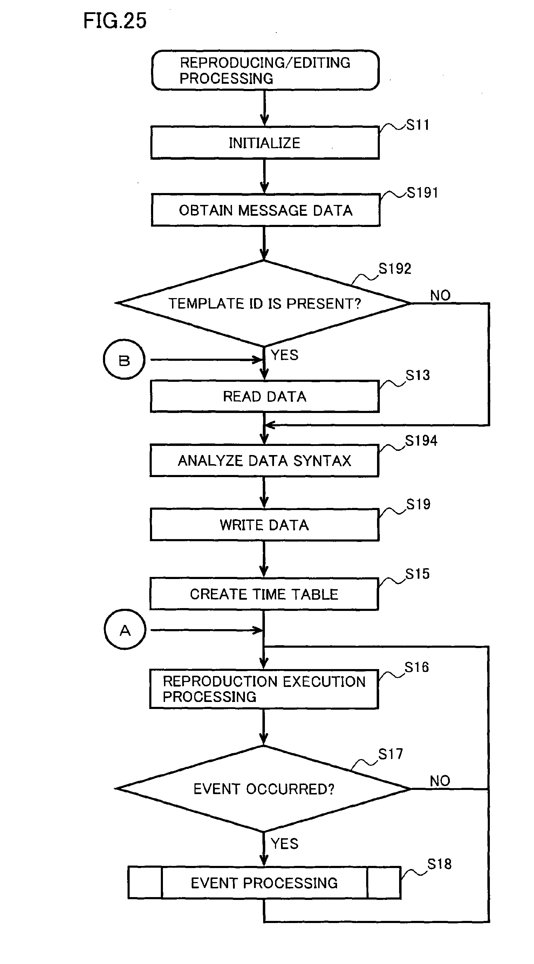

Fig. 25 is a flowchart including processing of reediting the message data in addition to the processing in the flowchart of Fig. 9. Referring to Fig. 25, step S12 in Fig. 9 is replaced with steps S191 and S192, and step S14 in Fig. 9 is replaced with step S194.

In step S191, message data reading unit 1319 reads the message data temporarily saved in various-data storing unit 157.

In step S192, template determining unit 1320 determines whether the read message data includes the template ID or not, and the template is determined from the template ID when included so that the result becomes YES.

In step S13, data reading unit 1311 reads the determined template data from various-data storing unit 157 similarly to Fig. 9.

In step S194, syntax analyzing unit 1312 performs the syntax analysis on the template data included in the message data when the template data is not read in step S13. When the template data is read in step S13, syntax analyzing unit 1312 performs the syntax analysis on the read template data. The processing in the subsequent steps is the same as that in the flowchart of Fig. 9.

The message data write processing in step S27 of Fig. 23, which is a substance of the event processing in step S18, may be the message data write processing already described in connection with the first, second and third specific examples, or may be processing of writing out the message data including the template ID as described in connection with the fourth specific example. When the message data is written in the fourth specific example, the message data including the template ID is transmitted.

### [Second Embodiment]

The message data transmitted as described in connection with the first embodiment is received by the various information device terminals having a data communication function via the public line network, Internet or broadcasting network as illustrated in Fig. 1. As a second embodiment, description will now be given on processing in a device receiving the message data.

The first embodiment has been described in connection with the flow of reading the template data into cellular phone 1 and executing it. In particular, description has been given with reference to Fig. 3 on the processing that is effected on the template data obtained from template providing server 2 via communication unit 110 by control unit 120 executing reproducing/editing engine program 131.

By executing mail program 152, the message data may be received via communication unit 110 from another message creating device, i.e., another cellular phone 1, and this message data is likewise processed by control unit 120 executing reproducing/editing engine program 131.

Reproducing/editing engine program 131 in cellular phone 1 receiving such message data has the same structure as that illustrated in Fig. 3. In this case, however, syntax analyzing unit 1312 must determine whether the data read from data reading unit 1311 is template data or message data. Syntax analyzing unit 1312 can perform the above data determination in two basic manners.

In the first determining manner, control unit 120 determines the template data or the message data depending on the manner in which communication unit 110 receives the data. For example, control unit 120 determines the data received by starting mail program 152 as the message data, and determines the data downloaded from template providing server 2 as the template data. Also, the data stored in advance as the template data in storing unit 130 is determined as the template data. Since the template data may be transmitted by starting mail program 152, determination of whether the data in question is the message data or the template data may be performed, e.g., by checking contents of a mail header generally added to the mail data.

In the second data determining method, the determination is performed based on a description representing whether the template data included in the received data is the message data or not. The specific example of the template illustrated in Fig. 6 or 7 describes in the 5th line that the data is the template data. In this case, this description is checked to determine whether the data is the template data or the message data. In this case, it is necessary in the message write processing to perform processing of omitting the description in the 5th line of Fig. 16 or 17 representing that the data is the template, although not described in connection with the message write processing previously described.

In the second embodiment, data reading unit 1311 or syntax analyzing unit 1312 in cellular phone 1 determines whether the obtained data is the template data or the message data, as described above.

Description will now be given on the flow of processing of the message data read by data reading unit 1311. In the following description, a mode in which the data read by reproducing/editing engine program 131 is determined as the message data is referred to as a "View mode".

First, description will be given on the case where the message data read by data reading unit 1311 is the message data (Fig. 20) already described in connection with the first specific example of the message data write processing.

In this case, syntax analyzing unit 1312 determines the medium data reproduction layout or the timing portion in the message data illustrated in Fig. 20 as the message area, and also determines the media data portion in the above message data as the message area, and reproduction data writing unit 1316 writes out the portions determined as the message area.

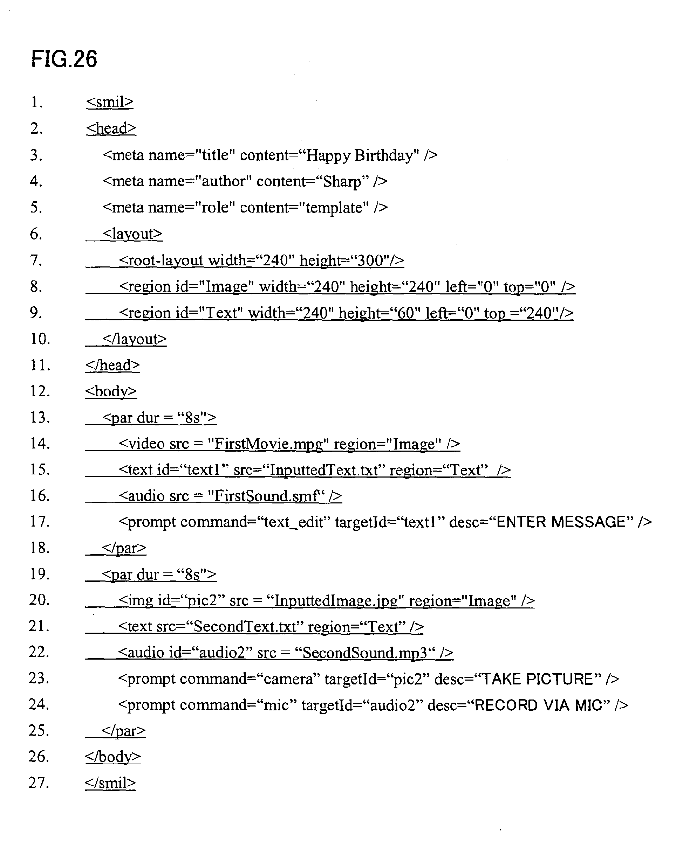

Fig. 26 underlines the portions determined as the message area in the message data illustrated in Fig. 17. In Fig. 26, the tags other than the <meta> tags and <prompt> tags are determined as the message areas. Thus, syntax analyzing unit 1312 determines the message area based on the tag information in the message data.

Syntax analyzing unit 1312 passes the analysis result to execution control unit 1313 and time managing unit 1314.

Time managing unit 1314 creates the time table based on the analysis result provided from syntax analyzing unit 1312. Time managing unit 1314 provides the created time table to execution control unit 1313. Event managing unit 1315 detects the occurrence of the event. Event managing unit 1315 provides the result of detection to execution control unit 1313.

Execution control unit 1313 controls the display/reproduction processing based on the time table provided from time managing unit 1314, the result of detection of the event occurrence provided from event managing unit 1315 and the analysis result provided from syntax analyzing unit 1312.

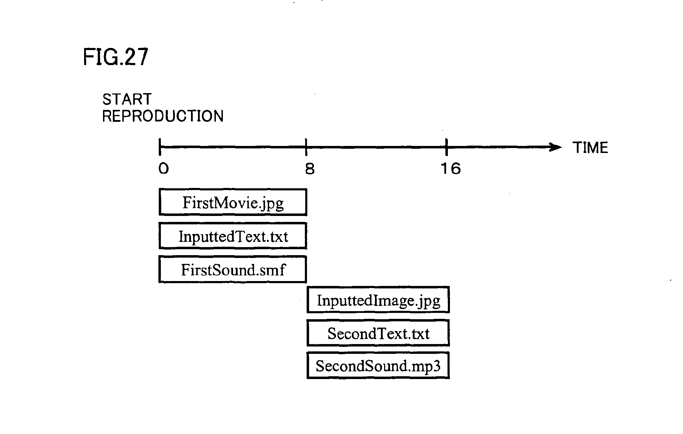

The flow of the reproduction processing and edition processing executed by cellular phone 1 under the control of execution control unit 1313 is substantially the same as that of the processing in the first embodiment illustrated in Fig. 9. Fig. 27 illustrates a specific example of the time table created by time managing unit 1314 of the second embodiment. In the View mode of the second embodiment, each media data included in the message data is displayed according to the time table in Fig. 27.

In the View mode, the processing in step S17 of Fig. 9 detects the occurrence of an end arrival event in which the time table arrives at the end, and further detects occurrence of such event or operations that the user creates the template data from the message data, and instructs the creation of the template data, e.g., for creating the message based on the template data. Further, the processing detects the occurrence of the events that include the Select key operation, are caused via key-code input device 142 and are used as the user interface for starting the functions illustrated in Fig. 11.

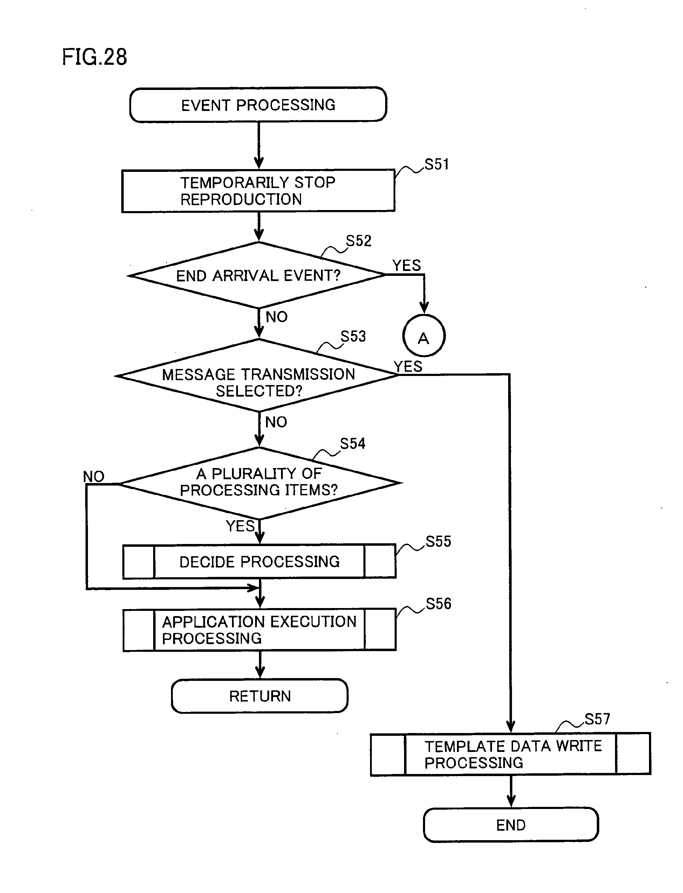

Fig. 28 illustrates the flow of event processing in the View mode according to the second embodiment.

When the information of detection of the event occurrence is received from event managing unit 1315 in the above step S17, execution control unit 1312 temporarily stops the current time table in step S51.

In step S52, processing is performed to determine contents of the event of which occurrence is detected in step S17. When it is determined in step S52 that the event thus detected indicates the arrival at the end of the time table (YES in S52), the process returns to step S16 in Fig. 9. Thus, the process returns to the start of the time table. However, the processing may be configured to terminate the reproduction after repeating the above processing one or a predetermined number oftime(s).

When the event of which occurrence is detected in step S17 is an operation indicating creation of the template data from the message data as well as creation of the template, e.g., for creating the message based on the above template data (YES in S53), the template data write processing is performed in step S57 such that the message data read from data reading unit 1311 is used, syntax analyzing unit 1312 performs the syntax analysis, template data writing unit 1318 writes out the template data that can be reused for the message creation, and the event processing ends. The template data written in step S57 is stored in storing unit 130, and is used again for creating the message. The processing of reading the template data and creating the message data is the same as that already described in connection with the first embodiment. The template data write processing of writing out the template data from the message data in step S57 varies depending on the first to third specific examples of the message data write processing of the first embodiment, and will be described in detail later.

When the event of which occurrence is detected is neither the event indicating the arrival at the end of the time table nor the operation for instructing the creation of the template data used, e.g., for creating the message based on the template data (NO in S52 and NO in S53), determined processing is executed in steps S54 - S55. Thus, when the Select key is operated and thus the event occurs, the program to be started corresponding to the time of the operation is extracted based on the time table in Fig. 11. When a plurality of programs are extracted for start in step S54, decision processing is performed in step S55 for deciding the program to be actually started. These operations are the same as those in steps S24 - S25 in Fig. 13. However, the <prompt> tag specifying the start function is not written in the specific example of the message data illustrated in Fig. 26 so that the function to be started does not occur. An example in which the function to be started occurs will be described later.

Finally, the function specified in the application execution processing is executed in step S56. The application execution processing in step S56 is also substantially the same as that in step S26.

Description will now be given on the processing of writing out the template data by template data writing unit 1318 in foregoing step S57. This processing is equivalent to the processing of writing out a message data creation supporting area portion form the message data illustrated in Fig. 5.

When the read message data is the message data (Fig. 20) indicated in the first specific example of the message data write processing described in connection with the first embodiment, template data writing unit 1318 is merely required to write the read data as the template data without edition. In this case, the template (e.g., Fig. 6) serving as the base and the created message data (e.g., Fig. 16) differ from each other in underlined portions in Fig. 16 and the media data portions. Accordingly, the template data write processing in step S57 is executed to write the template data that is not completely the same as the base or original template, but the template data thus written has the layout reproduction portion or timing portion, the editable area specifying portion and the start function of guidance portion which are the same as those of the original template. Therefore, the written template can be reused as the template with substantially the same usability and operability as those of the original template. However, the reproduction data included in the original template data is replaced with the underlined reproduction data in Fig. 16.

When the read message data is the message data (Fig. 21) indicated in the second specific example of the message data write processing already described in connection with the first embodiment, template data writing unit 1318 extracts a second SMIL portion from the message data in Fig. 21, and writes it in step S57. Then, the media data used by the extracted SMIL portion is taken out from the media data portion and is written. Thereby, the original template data can be completely restored from the read message data. The SMIL portion to be extracted may be described in the role attribute of the <meta> tag in the SMIL portion (5th line in Fig. 6 or 7), or may be predetermined depending on the position in the data such that the last data in the message data is the template data. The header of the message data may include a description specifying the data in the message as the template data, or specifying the correspondence between the data and the portion in the message data. Since the header of the template data includes the template data component information described above, it is easy in cellular phone 1 to determine the portion serving as the message data creation supporting area, and further a template creator can provide an intended message creating method.

The portions representing the respective area contents of the message data may be included as one file instead of including them in the header format so that the determination can be performed by interpreting this file. Since the template data component information is included in the file format, this allows easy determination of the portion serving as the message data creation supporting area in cellular phone 1, and also allows holding of more complicated information.

Even in the case where the read message data is the same as that represented in the third specific example of the message data write processing described in connection with the first embodiment, it is possible to employ the writing manner corresponding to the second specific example of the foregoing message data write processing. This is because the message data represented in the third specific example of the message data write processing and the message data represented in the second specific example differ from each other in the first SMIL portion illustrated in Fig. 19, and provide the same template data when obtained in the foregoing taking-out method.

Since different methods of extracting the template data may be employed depending on the message data write processing as described above, it is necessary to determine the message data writing method when selecting the extracting method. The message data writing method and the corresponding template data extracting method may be determined in advance. Thus, these methods may be determined in advance in the terminal on the transmission side and in the terminal on the reception side. Also, information specifying these methods may be added to the mail header when transmitting the mail, or the method may be specified by the <meta> tag or the like in the template data.

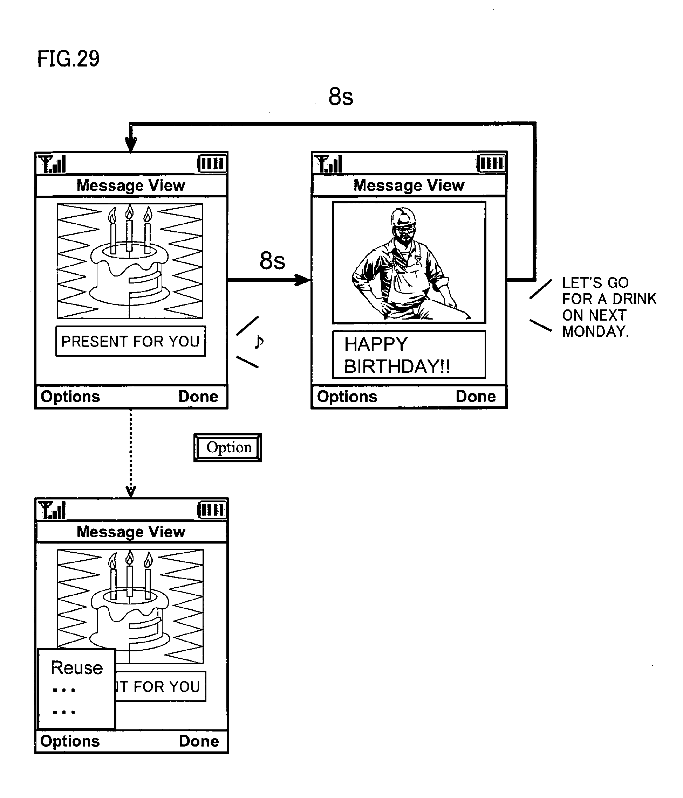

Fig. 29 illustrates a specific example of changes on screen displaying the message data which is illustrated in Fig. 19 and is received by cellular phone 1. The specific example of the screen changes illustrated in Fig. 29 appears when the foregoing message data (Fig. 20) illustrated in connection with the first specific example of the message data write processing is read and displayed.

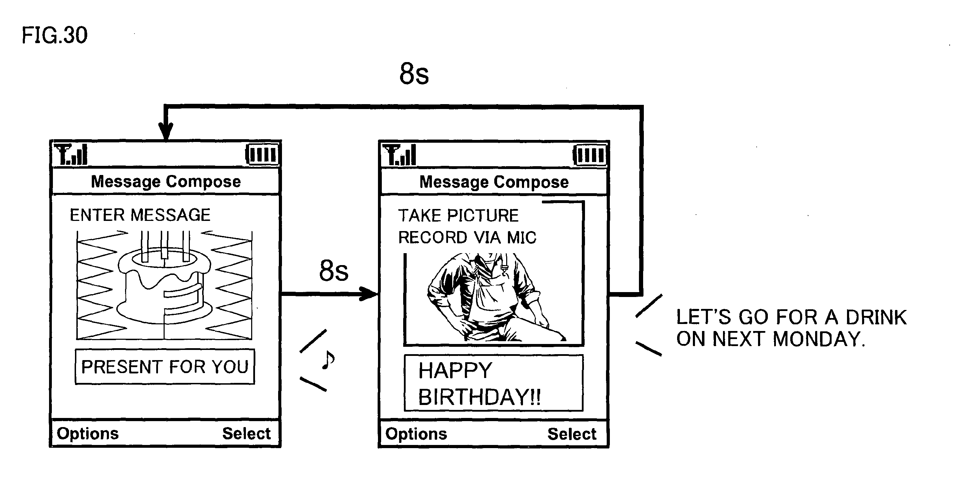

Referring to Fig. 29, a guidance portion is not displayed when reproducing the received message. Also, no function starts, and the operation is merely performed to display the specified media data according to the specified layout and timing. For example, when the template data is to be created from the received message data for creating a further message based on the created template data, the Option key is touched for instructing creation of the template data. When Reuse is further selected, the template data is written out as described above, and the screen shows contents illustrated in Fig. 30 by reading the template data thus written. The flow of this processing is substantially the same as that of the processing already described with reference to the specific example of the screen changes in Fig. 18, and differs therefrom only in that the text data "FirstText.txt", image data "SecondImage.jpg" and sound data "SecondSound.mp3" included in the original template data are replaced with inputted text data "InputtedText.txt", image data "InputtedImage.jpg" and sound data "InputtedSound.mp3", respectively. The information required for creating the message, i.e., the information indicating the editable area, the information specifying the function to be started and the guidance can be used similarly to the information included in the original template. Naturally, when the template data is restored by reading the message data represented in the second and third specific examples of the message data write processing, it is possible to restore the data including the text data "FirstText.txt", image data "SecondImage.jpg" and sound data "SecondSound.mp3" which are included in the unedited original template data.

Description has been given on the method in which the message is created and transmitted using the template data in the form of Fig. 6 or 7, the transmitted message data is received and then the template data is restored from the message data. Then, description will be given on the case of using another form of template.

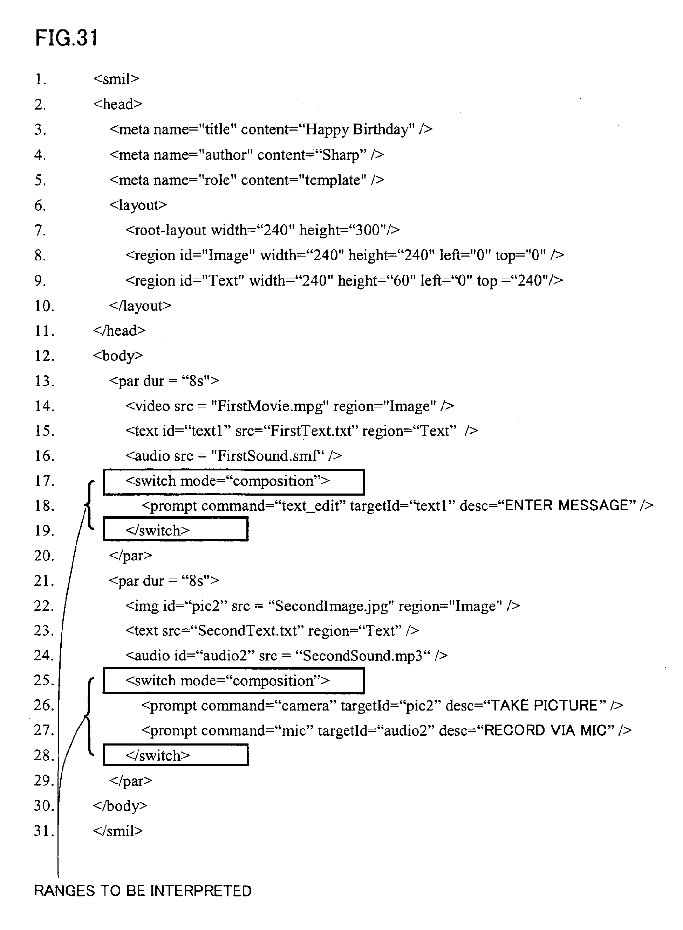

Fig. 31 illustrates another specific example of the template data of the format in which the tag indicated in the first embodiment for creating the message with the template can be discriminated according to the <switch> tag from the tag used for displaying the message data as the message. More specifically, in the template data of which specific example is illustrated in Fig. 31, "composition" is specified by the mode attribute of the <switch> tag in the 17th line so that the 18th line defined by this the <switch> tag is interpreted only when the message creation is performed using this template. Likewise, the 26th and 27th lines defined by the <switch> tag specified in the 25th line is interpreted only when the message creation is performed using the template.

This represents that the <switch> tag can discriminate between the message area and the message creation supporting area. Thus, for creating the message with the above template data, the data for message creation is written in steps S14 and S19 in Fig. 9. In this write processing, contents or data are written out from ordinary areas not bearing <switch> tag and the areas bearing the <switch> tag of the mode attribute "composition", and the writing is not performed from areas specified by attributes other than "composition". Thus, cellular phone 1 can use the tags for determining the specification of the layout information or reproduction timing of the media data and the editable media data, and for determining the function to be started for editing the media data and the guidance effective at creating the message data, and can use the tags for determining the area in the template data serving as the message creation supporting area. Since the tag clearly describes the message creation supporting area in the template data, it is easy in cellular phone 1 to determine the portion serving as the message data creation supporting area, and the template creator can provide an intended message creating method. Since the tag clearly describes the portion forming the message area when the created message data is displayed, the message area in the template data can be readily determined in cellular phone 1, and the message creator can employ the intended display method. Also, the template creator can provide the intended message creating method and the intended message display method.

In the operation of displaying the message with the template data used as the message data, the areas other than <meta> tag and <prompt> tag are determined as the message areas when extracting the message area in the case where the description is made using the edited message data in Fig. 26. However, the use of the above <switch> tag offers the advantage that it is not necessary to store in advance the respective tags to be ignored and the respective tags to be employed in the display processing, and it is merely required to interpret the <switch> tag.

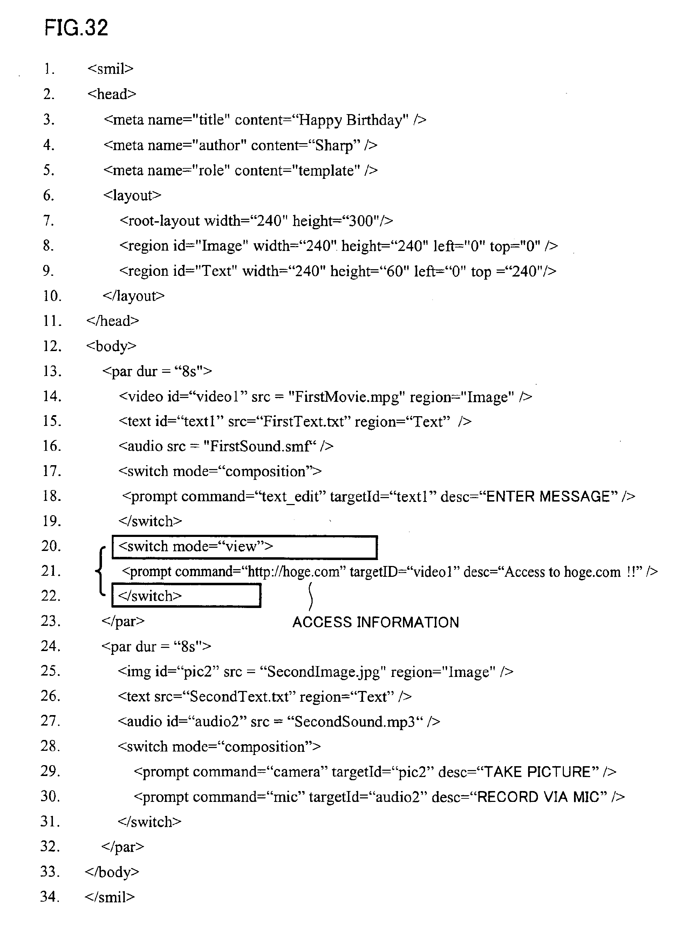

Fig. 32 illustrates another specific example of the template data, and particularly illustrates an example in which "view" is specified by the mode attribute of the <switch> tag in the 20th line. In this case, the 21 st line is used only for displaying the template data as the message, and is not used when creating the message based on the template data.

The 21 st line specifies that the WWW browser starts and accesses a website "hoge.com" when a certain user's operation such as touch of the Select key occurs during reproduction of the movie data "FirstMovie.mpg". This function used for guidance to the website or the like is not necessary when creating the message with the template data, but it may be used when displaying this template data as the message. In this case, it is preferable to employ the specifications in the above manner.

As described above, the specification in the 21 st line or the like can operate to allow access to the specified website during display of the message data, and to prevent the access to the website during creation of the message data. This function may be applied, e.g., to EC (Electronic Commerce) service.

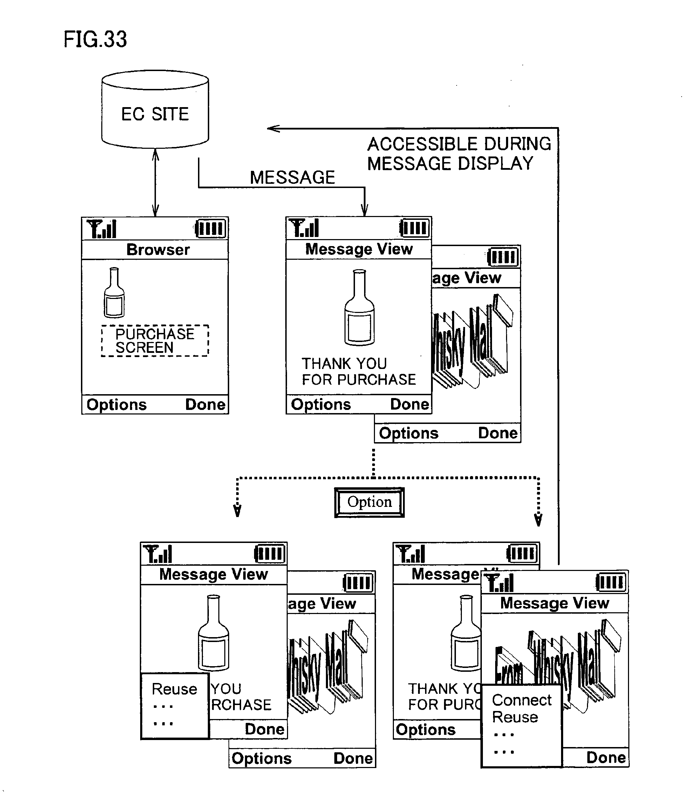

Fig. 33 illustrates functions that are executable when message data is obtained by accessing the EC site. Referring to Fig. 33, it is assumed that the user using the WEB browser accessed a certain EC site and purchased a certain article (e.g., whiskey). The EC site transmits message data for confirmation of purchase and others to the user. This message data allows restoration of the template data as already described. It is assumed that the EC site transmits the message data including two pictures.

When the first picture is being displayed, the Reuse menu can be selected after selecting the Option key. When the second picture is being displayed, the Reuse menu can be selected after selecting the Option key, and the Connection menu can also be selected after selecting the Option key. When the Connect menu is selected, access to the EC site is performed, and a homepage of the EC site is displayed.

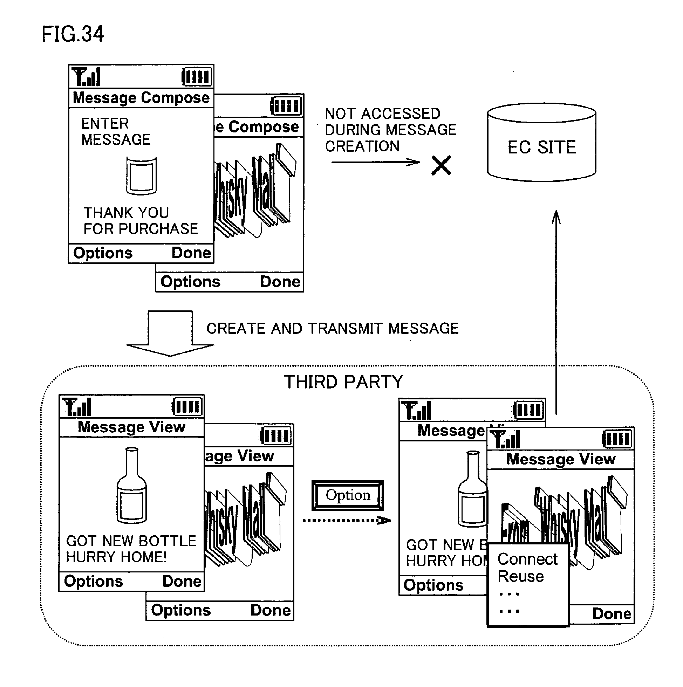

Fig. 34 illustrates functions that can be executed after the Reuse is selected. As illustrated in Fig. 34, the message creation is allowed when the Reuse is selected. In this example, the message data on the first picture can be changed. The procedure of the message creation are substantially the same as that already described in the example of Fig. 26, and therefore description thereof is not repeated. When Reuse is selected, access to the EC site is not allowed.

When the user changes the first picture, the changed new message data is transmitted to a user's friend, i.e., a third party. The third party can receive and display this message data, as can be done by the user who transmitted the message data. The third party can access the EC side during display of the message data, as can be done by the user. Thereby, the third party recognizes the presence of the service (whisky shop) provided by the EC site, and the service provided by the EC site is distributed. Since the third party receives this message data from the friend, it can be expected that the third party can use the service provided by the EC site in a carefree manner, and this promotes the distribution of the service.

As can be done by the user who transmitted the message data, the third party can create the message data on the first picture, but cannot access the EC site during creation of the message data. This prevents such a situation that the third party accesses the EC site during creation of the message data to display an EC site not concerning directly with the creation of the message data, and thereby the operation of creating the message is hindered.

Instead of accessing the EC site by selecting the Connect menu, a certain key may be touched apart from the Connect menu to access the EC site, and simultaneously a certain message representing that the access to the EC site is allowed may be displayed.

The message creating area of the template data illustrated in Fig. 5 includes all the media data reproduction layout portion, media data timing portion, editable area specifying portion, start function portion, guidance portion and media data, but it is not essential to include all of them. A message creation area (i.e., area for message creation) of the template data is required to include at least one of them as described below.

The media data reproduction layout portion is not required when the media data is to be displayed with a predetermined layout. The media data timing portion is not required when the media data is to be displayed according to predetermined timing.

The editable area specifying portion is not required when the editable area is predetermined, or when a guidance can notify the user of the editable area. For example, in the template illustrated in Fig. 16, the area in the 6th - 8th lines representing "InputtedText.txt", "InputtedImage.jpg" and "SecondSound.mp3" is specified as the editable area. However, the editable area specifying portion is not required if the guidance can notify the user of the fact that the displayed area is editable.

Even when the start function portion is not present, the available application can be started according to the type of media data, and the start function portion is not essential. For example, in the template of Fig. 16, the 6th - 8th lines start the applications ("Text edit", "camera" and "mic") for editing the media data. However, it may be determined in advance that "Text edit" starts when the text is to be edited, "camera" starts when the image is to be edited, and "mic" starts when the sound is to be edited, in which case the start function portion can be eliminated.

When it is not necessary to guide the user, the guidance is not required. The media data is required when displaying the message, but is not essential when creating the message.

As described above, the media data reproduction layout portion, media data timing portion, editable area specifying portion, start function portion, guidance portion and media data are not essential in the message creation area of the template, and it is merely required that the message creating area of the template data includes at least one of them. Therefore, the message creation area of the template may include, e.g., only the guidance.

The template data illustrated in Fig. 32 is a specific example of the template data for performing network access when displaying this template data as a message, but may include a description causing the network access during the message creation. Thus, the line(s) defined by the <switch> tag of the mode attribute "composition" already described may include the description causing the network access. Provision of this description allows access to the service or the like that provides the data and/or functions for supporting the message creation when creating the message with the above template, and allows use of such data and functions. Thus, it is possible to write the template data that allows the message creation using the function on the same network as that used when the message was created. For example, it can be envisaged that the media data is obtained by accessing the function on the network, or the media data is edited by accessing the function on the network. Owing to the above data structure of the template data, the access to the message creation supporting service is performed again when the foregoing processing is executed to reuse the above template data, and this contributes to distribution of the service,

Thus, owing to the above data structure of the template, the functions on the network can be used during creation of the message, and the receiver who received the message created with this template can use the function on the same network when the receiver creates the message from the received message, reusing the message creation supporting area. Thereby, the functions in themselves on the network can be distributed.

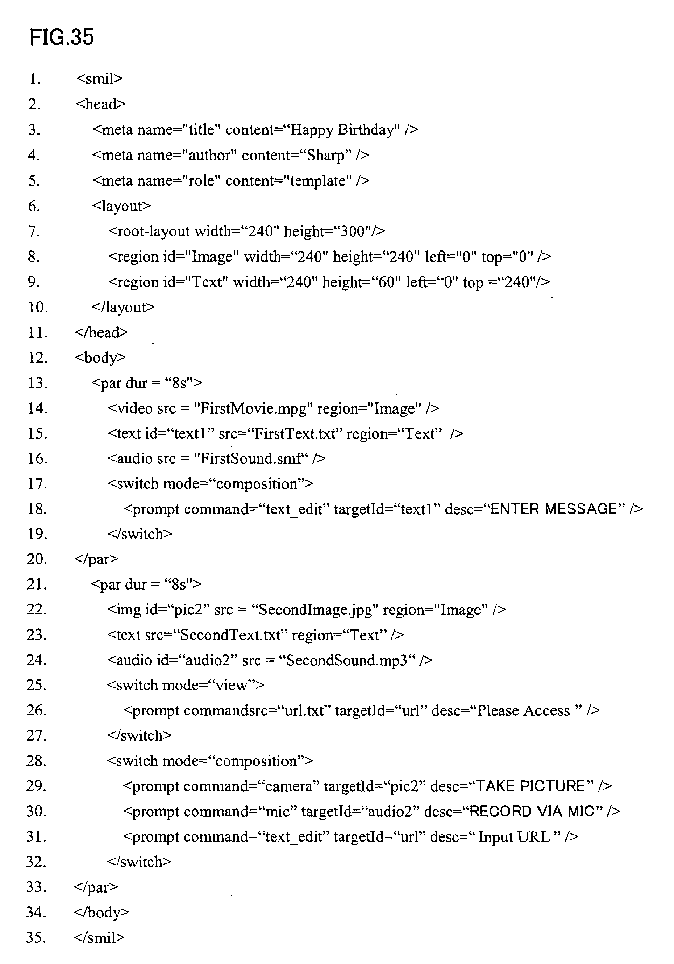

Fig. 35 illustrates another specific example of the template data, and particularly illustrates a specific example of the template data in which contents of the <prompt> tag can be edited. More specifically, the user can edit the start function specified in the template according to this specific example of the template data.

Referring to Fig. 35, according to the <prompt> tag in the 26th line, the command is specified by a file "url.txt", and it is specified by the <prompt tag> in the 31st line that the text editor can edit the file "url.txt". The <prompt> tag in the 31st line is used only for creating the message with this template. Conversely, the <prompt> tag in the 26th line is used only for displaying the template data as the message. For example, therefore, the user creating the message with this template data can readily insert the function of accessing a site prepared by him/her into the message. Further, the receiver receiving the message can extract the template data from the received message data, and can revise the access destination when creating the message again with the template data.

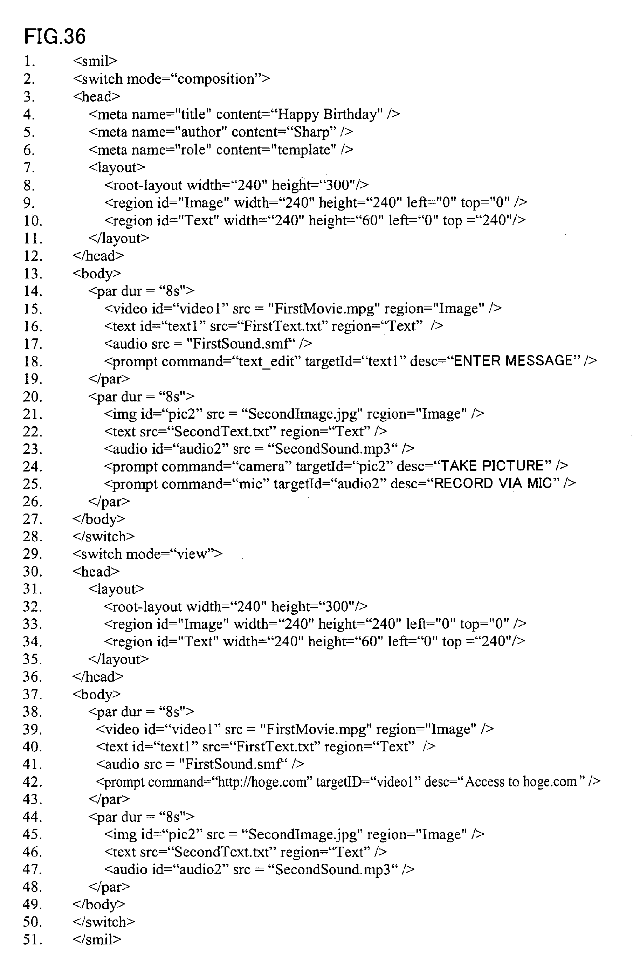

Fig. 36 illustrates still another specific example of the template data. Processing the template data illustrated in Fig. 36 is resultantly performed by the same operations as those for processing of the template data illustrated in Fig. 35, but the template data in Fig. 20 and that in Fig. 36 differ from each other in position of the <switch> tag. As illustrated in Fig. 36, a frame of a nearly whole description is divided by the <switch> tags, whereby such a template can be created that the display for creating the message with this template is completely different from the display for displaying the template as the message data.

As another specific example of the template data close to the above, there is template data such as the message data represented in the second and third specific examples of the message data write processing. Thus, in this template, the portion used for the message creation and the portion used for the message display are not included in the same description, but are included in different descriptions, respectively. In the case relating to the specific example of the message data represented in the third specific example of the message data write processing, the template data is configured such that the first SMIL portion in the template data in Fig. 21 is used for the message display, but does not include the editable area specifying portion as well as the start function or guide portion. Thus, this template data can be considered that the message display area (prepared by eliminating editable area specifying portion as well as the start function or guide portion from the first SMIL portion) and the message creation supporting area (the second SMII, portion) are prepared independently of each other even in the initial state. This template data may be prepared in this format in the original state.

In this case, when the template is to be read and the data for message creation is to be written for performing the message creation in steps S14 and S19 in Fig. 9, the second SMIL portion, i.e., the message creation supporting area is written and the operations are executed. When the message display is to be performed, this display can be performed by substantially the same processing as that for displaying the message data in the second and third specific examples of the foregoing message data write processing. The manner of extracting the portion to be used for writing the data for message creation is substantially the same as the manner of extracting the template data from the message data represented in the second specific example of the message data write processing. Thus, it may be described in the role attribute of the <meta> tag in the SMIL portion (5th line in Figs. 6 or 7), or may be predetermined according to the position in the data such that the last data in the template data is the template data. The header of the template data may include the description identifying data in the template data providing the message creation supporting area, or identifying data providing the message area. The portions representing the contents of the respective areas in the message data may not be in the form of the header, but may form one file so that the determination can be performed by interpreting the file. In the above example, it is assumed that both the message creation supporting area and the message area are described in the SMIL language. However, these areas can be completely separated from each other in practice, and therefore templates exhibiting difference appearances can be created. Furthermore, it is possible to create the template in which the message creation supporting area and the message area are described in different languages, respectively.

In the above embodiment, the description providing the template data, i.e., the description for the message creation supporting is present in the message data. However, instead of the description for the message creation supporting, URL that is information for access to the device providing the available template may be described as the template data provider information in the message data. The template data provider information is originally described in the template data as the information about the provider of the template, and this template data provider information may be used. Alternatively, the template provider information may be stored at the time of obtaining the template data, and may be included in the message data at the time of creating the message in cellular phone 1.

In this case, the template data can be created from the received message by accessing the foregoing different device according to the above URL, and creating the necessary template data. By describing the provider of the template data in the message data as described above, the message receiver can readily obtain the template that was used when creating the message even in the case where the message data does not contain the contents of the message creation supporting area.

In the second embodiment, the template is created when the user performs the instruction operation. However, if the template can be restored when the message is received, the template restoration can be performed immediately when receiving the message. In this case, cellular phone 1 may be configured not to restore the template when it has already stored the same template. Further, when the received message has the description of the URL that is the information about access to the provider, i.e., the different device as described above, the processing may be configured to access immediately the URL for obtaining the template, or not to access it when the template is already obtained.

In the first embodiment, the manner of reediting the message data with the template ID has been described. It has also been stated that the message data to be transmitted may have the structure including the template ID as illustrated in Fig. 24.

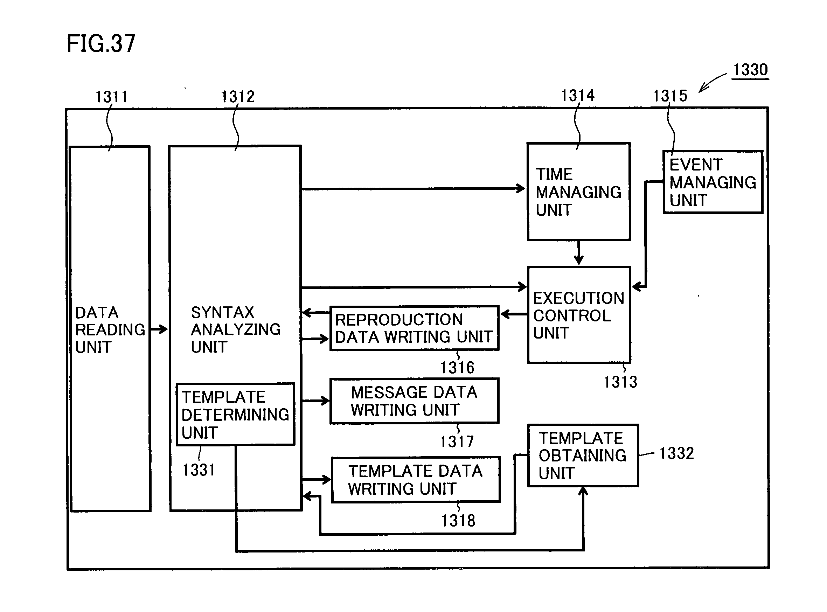

Fig. 37 illustrates the reproducing/editing program for the case of receiving the message data including the template ID. Referring to Fig. 37, a reproducing/editing program 1330 in Fig. 37 is the same as reproducing/editing program 131 in Fig. 4 except for that a template determining unit 1331 and a template obtaining unit 1312 are added.

Template determining unit 1331 determines the template data that was used when creating the message data, based on the template ID included in the message data read by data reading unit 1311.

When the determined template data is already obtained and stored in various-data storing unit 157, template obtaining unit 1332 instructs data reading unit 1311 to read it.

When the determined template data is not yet obtained, template obtaining unit 1332 instructs communication unit 110 to transmit the template ID from Internet provider server 2. Internet provider server 2 specifies and transmits the template data corresponding to the template ID. Communication unit 110 stores the received template data in various-data storing unit 157. Template obtaining unit 1332 instructs data reading unit 1311 to read the template data stored in various-data storing unit 157.

Syntax analyzing unit 1312 analyzes the syntax of the read template. The processing of creating the message data from the result of the syntax analysis is substantially the same as that already described.

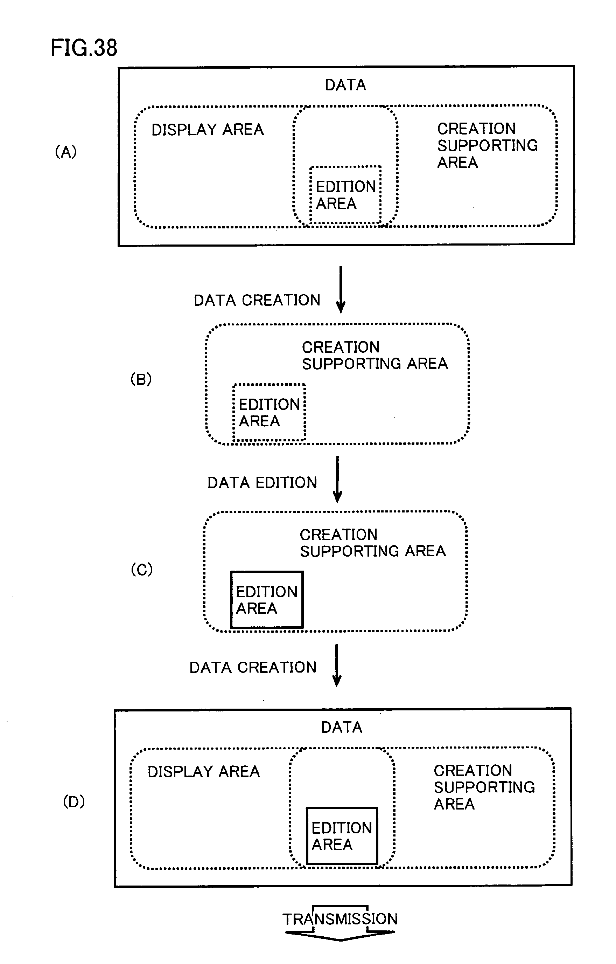

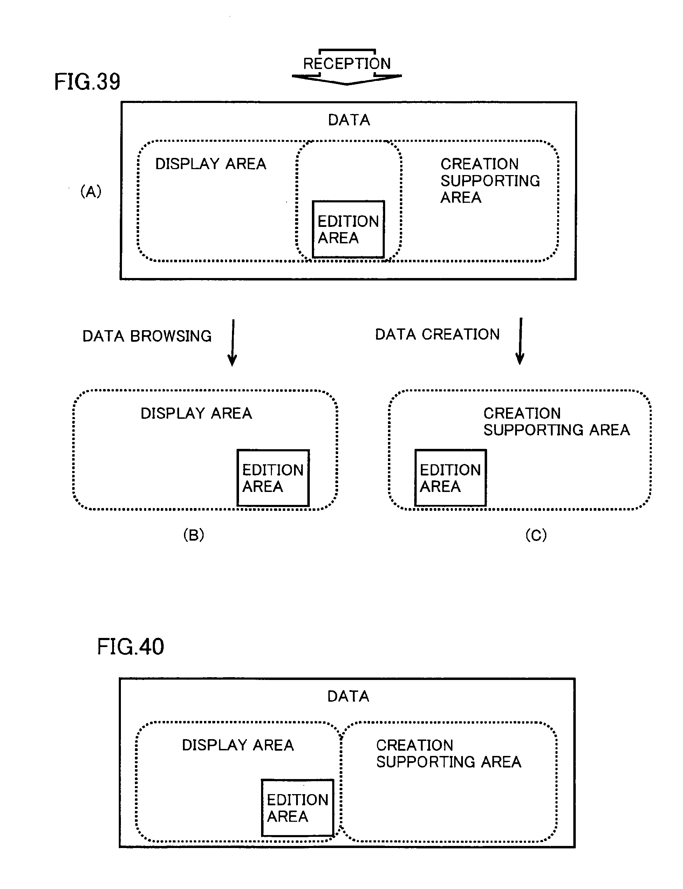

The foregoing processing is executed by cellular phone 1 of the embodiment of the data processing device according to the invention, and thereby allows the processing of creating the message data illustrated in Figs. 38 and 39 as well as the processing of browsing and creating the message data.

In the message data creating processing in Fig. 38, cellular phone 1 of this embodiment creates a new message with the template data that includes a browsing area (i.e., area for browsing) used for browsing the message data and a creation area used for creating the message data, and for this creation, cellular phone 1 extracts the creation area from the template, and uses it as illustrated in Fig. 38(B). This creation area includes or specifies an edition area to be edited during creation of the message data. According to the contents of the creation area, cellular phone 1 edits the edition area illustrated in Fig. 38(C) to create the message data. Therefore, the created message data takes such a form that the edition area in the original template data is changed. Cellular phone 1 has a distinctive feature that transmission of the created data is performed by transmitting not only the browsing area but also the creation area as illustrated in Fig. 38(D).

As described above, cellular phone 1 creates the message including the data that is present in the message data creation supporting area included in the template data. Therefore, on the receiver side reading the message, it is possible to reuse the message data creation supporting area that was used when creating the message.

Further, the message data creation supporting area includes the layout information or the reproduction timing of the media data, the specification of the editable media data, the function to be started for media data edition or the guidance effective at media data creation, or the media data to be reproduced. Therefore, the template creator can intentionally cause the message creator to create the message with the function specifying a more complicated message.

Referring to Fig. 39, when the transmitted template data created by the message data creating processing illustrated in Fig. 38 is received, the received template data includes the browsing area and the creation area as illustrated in Fig. 39(A). In the processing of browsing/creating the message data, cellular phone 1 reads the template data illustrated in Fig. 39(A), and extracts and uses the browsing area as illustrated in Fig. 39(B) when the data is to be displayed for browsing the message. Therefore, display and operation not required for the browsing are not performed. For creating the message data by the same operations as those which were performed when creating the message data, the creation area is extracted from the received template data, and is used as illustrated in Fig. 39(C). Thereby, the same operations as those that were performed for the message data creation can be restored.

Thus, when cellular phone 1 according to the embodiment performs the processing of creating the message data and the processing of browsing/creating the message data by using the above template data, the processing can be performed by extracting the browsing area and the creation area in the template data, and using the different areas for the message data browsing and the message data creation, respectively. The receiver receiving the created message data can restore the same operations as those that were performed when creating the message data.

In the operation of editing the message data, the message data creation supporting area and the message area are simultaneously edited. Therefore, when a relationship, e.g., that the same media data is used, is present between the data in the message data creation supporting area and the data in the message area, the changes according to the changes in data of the message creation supporting area can be readily effected on the data in the message area.

Since the data edition according to the message data creation supporting area is performed in a process different from that of the final message data creation, the data operations or manipulations for the data edition can be minimized.

When editing the message data, the message data creation supporting area in the template data is added to the message data as it is without edition. Therefore, the receiver receiving the message can reuse the message data creation supporting area that was used when creating the received message, as it is. Therefore, useless data is eliminated from the message area to reduce the message data.

In the processing of browsing/editing the message data illustrated in Fig. 39, the contents in the edition area is different from the edition area in the original template data. Therefore, the operation and display performed when processing the message data are not completely the same as those performed when the original template data was created. The completely same operations can be achieved, e.g., by employing the template data of the data structure in which the creation area does not include the edition area as illustrated in Fig. 40, or by transmitting the template data which is created not to include the edition area in the creation area when creating the message data.

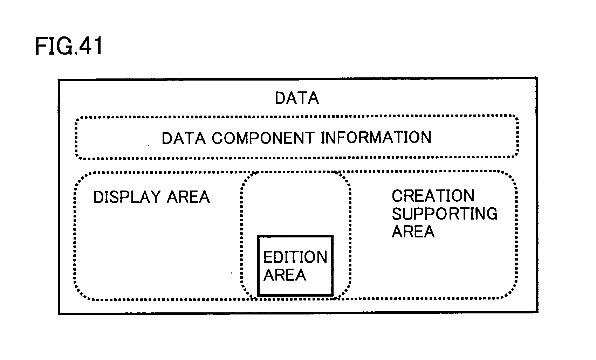

For facilitating the extraction of the browsing area and the creation area, the data may contain data component information identifying, in an independent fashion, the browsing area and the creation area as illustrated in Fig. 41.

### [Third Embodiment]

In the first embodiment, the edition of the message data illustrated in Fig. 20 or 21 is entirely performed by the template on the transmission side of the message data. In a third embodiment, a message server passing the message data edits the message data according to the processing capacity or performance of the terminal receiving the message.

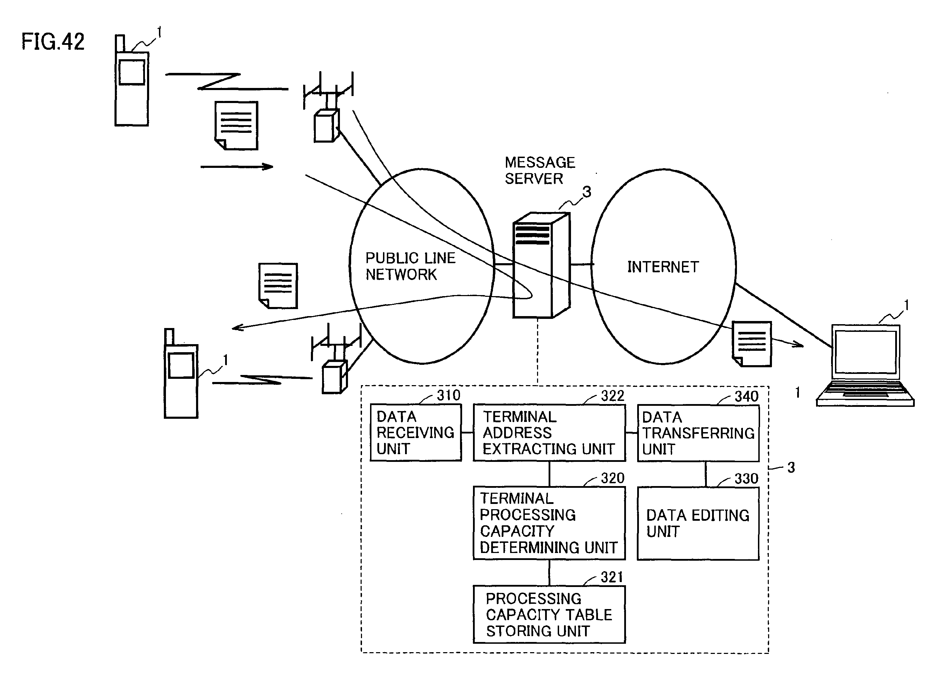

Fig. 42 illustrates a structure of a message server 3. Referring to Fig. 42, message server 3 includes a data receiving unit 310, a terminal address extracting unit 322, a processing capacity table storing unit 321, a terminal processing capacity designating unit 320, a data editing unit 339 and a data transferring unit 340.

Data receiving unit 310 receives message data. This message data includes a message area and a message data creation supporting area as well as addresses of reception terminals, similarly to the first embodiment.

Processing capacity table storing unit 321 stores a processing capacity table. The processing capacity table determines the correspondence between the addresses of reception terminals and the levels of processing capacity of the reception terminals. A processing capacity level "1" indicates a low processing capacity, a processing capacity level "2" indicates a middle processing capacity and a processing capacity level "3" indicates a high processing capacity.

Terminal address extracting unit 322 extracts the address of the reception terminal included in the received message data.

Terminal processing capacity designating unit 320 determines the processing capacity level of the reception terminal in the extracted terminal address with reference to the processing capacity table.

A data editing unit 330 edits the received message according to the designated processing capacity level of the reception terminal. For example, when the processing capacity level is "1", data editing unit 330 determines that the reception terminal cannot process the editable area specifying portion, start function specifying portion and guidance portion, and deletes these portions. When the processing capacity level is "2", data editing unit 330 determines that the reception terminal cannot process the editable area specifying portion and start function specifying portion, and deletes these portions. When the processing capacity level is "3", data editing unit 330 determines that the reception terminal can process all the portions, and does not delete any portion.

Data transferring unit 340 transmits the edited message to the terminal in the extracted address.

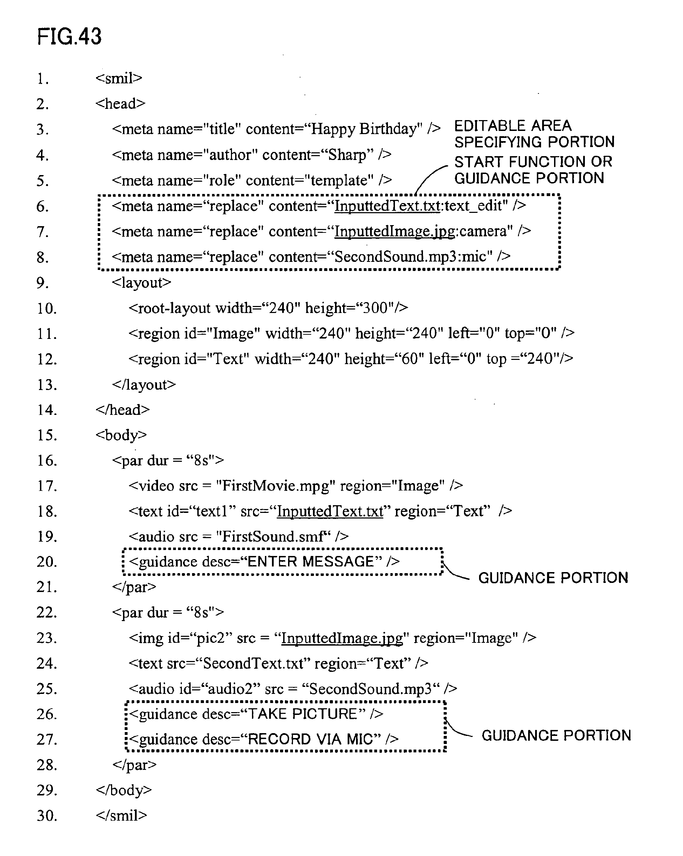

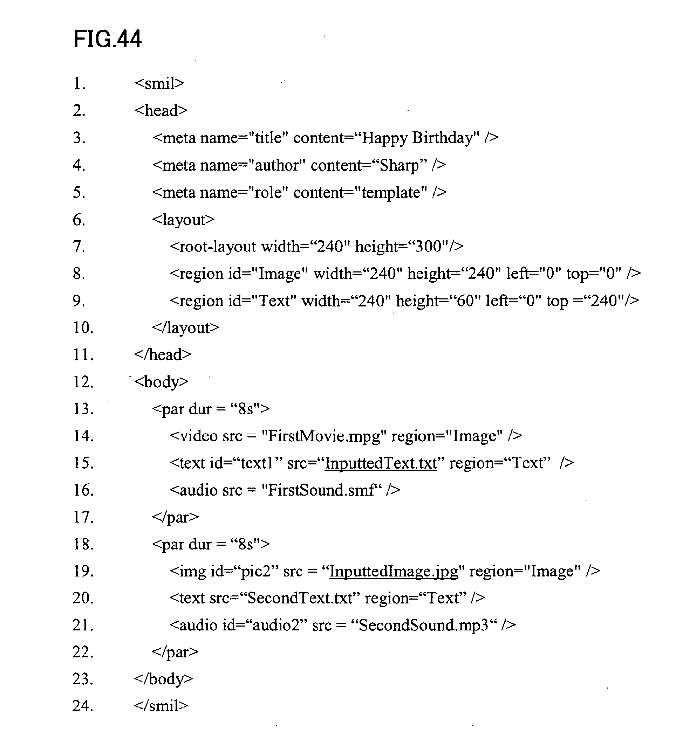

Fig. 43 illustrates an example of the message data received by message server 3. Fig. 44 illustrates an example of the message data prepared by editing the message data in Fig. 43 by message server 3. Since it is determined that the reception terminal has the processing capacity level of "1", the editable area specifying portion and the start function specifying portion in the 6th - 8th lines in Fig. 43 as well as the guidance portion in the 20th line and the guidance portion in the 26th - 27th lines are deleted in the message data illustrated in Fig. 44.

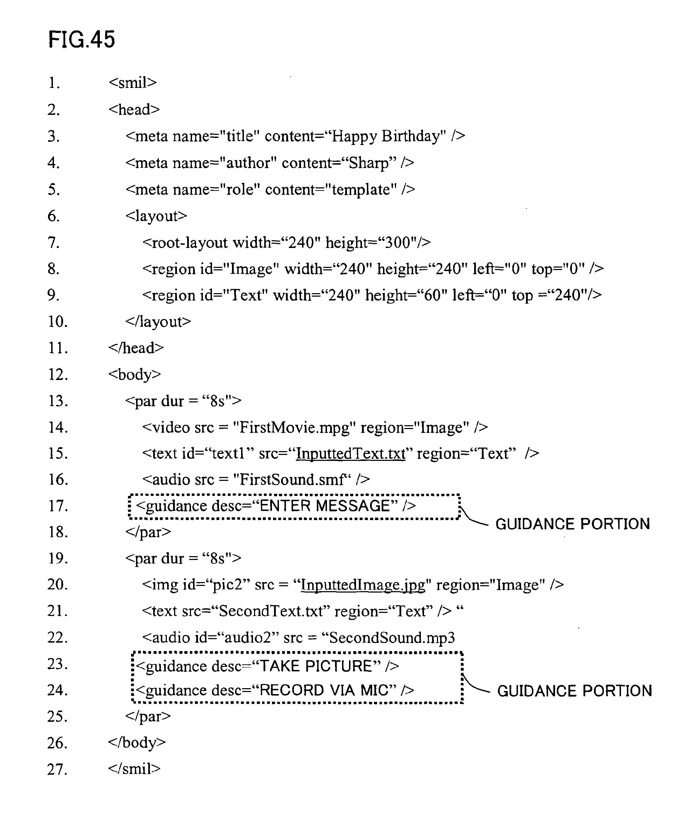

Fig. 45 illustrates another example of the message data prepared by editing the message data in Fig. 43. Since it is determined that the reception terminal has the processing capacity level of "2", the editable area specifying portion and the start function specifying portion in the 6th - 8th lines in Fig. 43 are deleted in the message data illustrated in Fig. 45.

As described above, the message server of this embodiment edits the message data according to the processing capacity of the reception terminal to allow the processing by the reception terminal. Therefore, the terminal on the transmission side can edit and create the message data without giving specific consideration to the processing capacity of the terminal on the reception side. Such a situation can be prevented that the message data is transmitted to the terminal on the reception side even when the terminal on the reception side cannot process it, and therefore wasteful loads on the network can be prevented.

In this embodiment, the processing capacity of the reception terminal is determined based on the address of the reception terminal. However, another manner may be employed. For example, the processing capacity of the reception terminal may be determined based on the telephone number of the reception terminal. It may be configured to determine the processing capacity of the reception terminal depending on the type of the reception terminal such as a cellular phone or a personal computer.

The message data creating method and the message data browsing/creating method that use the template data and are executed by cellular phone 1 according to the embodiment of the invention may be provided as a program. This program may be recorded on computer-readable record mediums such as a flexible disc, a CD-ROM (Compact Disc-Read Only Memory), a ROM, a RAM and/or a memory card for a computer, and may be provided as a program product. Also, the program may be provided by recording it on a record medium such as a hard disc in a computer. Further, the program may be provided by downloading over the network.

The program product thus provided is installed in a program storage unit such as a hard disc for execution. The program product includes the program as well as the record medium bearing the program.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data processing device comprising:
a first data reading unit (1311) for reading template data including a message data creation supporting area for creating message data and a message display area for displaying said message data;
a message data creation supporting area determining unit (1312) determining said message data creation supporting area included in said template data; and
a message data editing unit (1316) editing said message data by using data in said message data creation supporting area.

2. The data processing device according to claim 1, wherein
said message data creation supporting area includes at least one of media data to be reproduced in said message data, layout information used for reproducing said media data, information indicating timing of reproduction of said media data, information indicating editable media data among said media data, information specifying a function to be started for editing said media data and data of guidance being effective when creating said message data.

3. The data processing device according to claim 2, wherein
said function to be started for editing said media data is provided from a different device and can be used by accessing said different device.

4. The data processing device according to claim 2, wherein
said template data is data described with tags, and
the layout information used for reproducing said media data, the information indicating timing of reproduction of said media data, the information indicating the editable media data among said media data, the information specifying the function to be started for editing said media data and the data of guidance being effective when creating said message data are described for determination according to said tags or attributes of said tags, and
said message data creation supporting area determining unit (1312) determines said tags or the attributes of said tags to discriminate at least one of the layout information used for reproducing said media data, the information indicating timing of reproduction of said media data, the information indicating the editable media data among said media data, the information specifying the function to be started for editing said media data and the data of guidance being effective when creating said message data, and thereby determines said message data creation supporting area included in said template data.

5. The data processing device according to claim 2, wherein
said template data is data described using tags,
said tags include a tag indicating said message data creation supporting area, and
said message data creation supporting area determining unit (1312) uses the tag indicating said message data creation supporting area to determine said message data creation supporting area included in said template data.

6. The data processing device according to claim 2, wherein
said template data is data described using tags,
said tags include a tag indicating an area other than said message data creation supporting area, and
said message data creation supporting area determining unit (1312) uses the tag indicating the area other than said message data creation supporting area to determine said message data creation supporting area included in said template data.

7. The data processing device according to claim 1, wherein
said template data further includes a template data provider information area bearing information specifying a provider of said template data.

8. The data processing device according to claim 1, wherein
said template data includes template data component information indicating a location of at least one of said message data creation supporting area, said message data display area and said template data provider information area.

9. The data processing device according to claim 8, wherein
said template data component information is included in a header area of said template data, and
said message data creation supporting area determining unit (1312) determines said message data creation supporting area included in said template data based on information included in the header area of said template data.

10. The data processing device according to claim 8, wherein
said template data includes data formed of a plurality of file units, and said template data component information is one of said file units of data in said template data.

11. The data processing device according to claim 1, wherein
said message display area includes at least one of media data to be reproduced in said message data, layout information used for reproducing said media data, information indicating timing of reproduction of said media data, information indicating editable media data among said media data, information specifying a function to be started for editing said media data and data of guidance being effective when creating said message data.

12. The data processing device according to claim 11, further comprising:
a first message display area determining unit (1312) determining said message display area included in said template data, wherein
said message data editing unit (1316) simultaneously edits said message display area when editing said message data.

13. The data processing device according to claim 11, wherein
said message data editing unit (1316) edits said message data according to information in the message data creation supporting area determined by said message data creation supporting area determining unit (1312), and creates the message data using said edited data and the information of said message display area.

14. The data processing device according to claim 13, wherein
said message data editing unit (1316) describes a provider of said read template data in said edited message data when creating said message data.

15. The data processing device according to claim 13, wherein
said message data editing unit (1316) creates said message data including information indicating a location of said message data creation supporting area in a header area.

16. The data processing device according to claim 13, wherein
said message data editing unit (1316) creates said message data further including a template ID identifying said template data, and storing said message data in a storing unit (130).

17. The data processing device according to claim 16, further comprising:
a second data reading unit (1319) reading the message data stored in said storing unit; and
a template determining unit (1320) determining the template data used creating said message data based on the template ID included in said read message data, wherein
said first data reading unit (1311) reads said determined template data, and
said message data editing unit (1316) performs reedition of the message data read by said second data reading unit (1319) according to the information in the message data creation supporting area included in said template data.

18. The data processing device according to claim 11, wherein
said message data editing unit (1316) creates the message data by adding the message data creation supporting area included in said read template data to said edited message display area.

19. The data processing device according to claim 18, wherein
said message data editing unit (1316) deletes at least one of the information indicating the editable information, the information specifying the function to be started for editing said media data and data of guidance being effective when creating the message data from said message display area when creating said message data.

20. The data processing device according to claim 1, further comprising:
a communication unit (110) for transmitting the created message data.

21. The data processing device according to claim 1, further comprising:
a communication unit (110) receiving the message data including a message display area for display on the reception side and the message data creation supporting area used for previous creation;
a storing unit (130) storing said received message data;
a second data reading unit (1319) reading said stored message data;
a second message display area determining unit (1312) determining said message display area included in said read message data; and
a message reproducing unit (1313) displaying and reproducing said message data by using the data in said message display area, wherein
said message data editing unit (1316) creates the message data while assuming that said read message data is the template data.

22. The data processing device comprising:
a communication unit (110) receiving message data including a message display area for display on a reception side and a message data creation supporting area used for previous creation;
a storing unit (130) storing said received message data;
a data reading unit (1319) reading said stored message data;
a message display area determining unit (1312) determining said message display area included in said read message data;
a message reproducing unit (1313) displaying and reproducing said message data by using the data in said message display area; and
a template data writing unit (1318) writing said message data a template data.

23. The data processing device according to claim 22, wherein
said message data creation supporting area includes at least one of media data to be reproduced in said message data, layout information used for reproducing said media data, information indicating timing of reproduction of said media data, information indicating editable media data among said media data, information specifying a function to be started for editing said media data, and data of guidance being effective when creating said message data.

24. The data processing device according to claim 23, wherein
the function to be started for editing said media data is provided from a different device and can be used by accessing said different device.

25. The data processing device according to claim 23, wherein
said message data is data described with tags,
the layout information for reproducing said media data, the information indicating timing of reproduction of said media data, the information indicating the editable media data among said media data, the information specifying the function to be started for editing said media data and the data of guidance being effective when creating said message data are described for determination according to said tags or attributes of said tags, and
said message data creation supporting area determining unit (1312) determines said tags or the attributes of said tags to discriminate at least one of the layout information for reproducing said media data, the information indicating timing of reproduction of said media data, the information indicating the editable media data among said media data, the information specifying the function to be started for editing said media data and the data of guidance being effective when creating said message data, and thereby determines said message data creation supporting area included in said message data.

26. The data processing device according to claim 23, wherein
said message data is data described using tags,
said tags include a tag indicating said message data creation supporting area, and
said message data creation supporting area determining unit (1312) uses the tag indicating said message data creation supporting area to determine said message data creation supporting area included in said message data.

27. The data processing device according to claim 23, wherein
said message data is data described using tags,
said tags include a tag indicating an area other than said message data creation supporting area, and
said message data creation supporting area determining unit (1312) uses the tag indicating the area other than said message data creation supporting area to determine said message data creation supporting area included in said message data.

28. The data processing device according to claim 22, wherein
said message display area includes information instructing access to a different device, and
said message reproducing unit (1313) accesses said different device to display data obtained by the accessing when the information instructing the access to said different device is included.

29. The data processing device according to claim 22, wherein
said message data includes message data component information indicating a location of at least one of said message data creation supporting area, said message data display area and said template data provider information area.

30. The data processing device according to claim 29, wherein
said message data component information is included in a header area of said message data, and
said message data creation supporting area determining unit (1312) determines said message data creation supporting area included in said message data based on information included in the header area of said message data.

31. The data processing device according to claim 29, wherein
said message data includes data formed of a plurality of file units, and said message data component information is the data of one of said file units in said message data.

32. A data processing device comprising:
a communication unit (110) receiving message data including a message display area for display on a reception side and a message data creation supporting area used for previous creation;
a storing unit (120) storing said received message data;
a data reading unit (1319) reading said stored message data;
a message display area determining unit (1312) determining said message display area included in said read message data;
a message reproducing unit (1313) displaying and reproducing said message data by using the data in said message display area;
a message data creation supporting area determining unit (1312) determining said message data creation supporting area included in said message data; and
a template data writing unit (1318) writing said message data as the template data using data in said determined message data creation supporting area.

33. A data processing device comprising:
a communication unit (110) receiving message data including a message display area for display on a reception side and a template data provider information area describing information specifying a provider of template data used for previous creation;
a storing unit (120) storing said received message data;
a data reading unit (1319) reading said stored message data;
a message display area determining unit (1312) determining said message display area included in said read message data;
a message reproducing unit (1313) displaying and reproducing said message data by using the data in said message display area;
a template data provider determining unit (1331) determining a provider of the template data used creating said message data by using the data in said template data provider information area;
a template data obtaining unit obtaining said template data from said provider; and
a message data creating unit (1317) creating the message data by using said obtained template data.

34. A data processing device comprising:
a communication unit (110) receiving message data including a message display area for display on a reception side and a template data ID describing information identifying template data used for previous creation;
a storing unit (120) storing said received message data;
a data reading unit (1319) reading said stored message data;
a message display area determining unit (1312) determining said message display area included in said read message data;
a message reproducing unit (1313) displaying and reproducing said message data by using the data in said message display area;
a template data determining unit (1331) determining the template data used creating said message data based on the template data ID included in the read message data;
a template data obtaining unit (1332) obtaining said determined template data when said determined template data is obtainable; and
a message data creating unit (1316) creating the message data by using said obtained template data.

35. A data processing device comprising:
a communication unit (110) receiving message data including a message display area for display on a reception side and a template data ID describing information identifying template data used for previous creation;
a storing unit (120) storing said received message data;
a data reading unit (1319) reading said stored message data;
a message display area determining unit (1312) determining said message display area included in said read message data;
a message reproducing unit (1313) displaying and reproducing said message data by using the data in said message display area;
a template ID transmitting unit (110) transmitting the template data ID included in said read message data to a different device;
a template data obtaining unit (1332) obtaining the template data determined based on said template ID as the template data used creating the message data from said different device; and
a message data creating unit (1317) creating the message data by using said obtained template data.

36. A data processing device comprising:
a data receiving unit (310) receiving message data including a message display area for display by a terminal on a reception side, a message data creation supporting area used for previous creation and an identifier of the terminal on the reception side;
an identifier extracting unit (322) extracting the identifier of the terminal on the reception side included in said received message;
a storing unit (321) storing a table determining a correspondence between the identifiers of the terminals and processing capabilities;
a processing capacity determining unit (320) determining the processing capacity corresponding to said extracted identifier of the terminal with reference to said table;
a data editing unit (330) editing said message data according to said determined processing capacity; and
a data transmitting unit (340) transmitting said edited data.

37. A data processing method comprising:
a data reading step (S13) of reading template data formed of a message data creation supporting area for creating message data and a message display area for displaying said message data;
a message data creation supporting area determining step (S14) of determining said message data creation supporting area included in said template data; and
a message data editing step (S35) of editing said message data by using data in said message data creation supporting area, wherein
said message data editing step (S35) creates said message data including the message data creation supporting area included in said read template data.

38. A data processing method comprising:
a receiving step of receiving message data including a message display area for display on a reception side and a message data creation supporting area used for previous creation;
a storing step of storing said received message data in a storing device;
a data reading step (S191) of reading said message data stored in said storing device;
a message display area determining step (S194) of determining said message display area included in said read message data;
a message reproducing step (S16) of displaying and reproducing said message data by using the data in said message display area; and
a template data writing step (S57) of writing said message data as template data.

39. A data processing method comprising:
a receiving step of receiving message data including a message display area for display on a reception side and a message data creation supporting area used for previous creation;
a storing step of storing said received message data in a storing device;
a data reading step (S191) of reading said message data stored in said storing device;
a message display area determining step (194) of determining said message display area included in said read message data;
a message reproducing step (S16) of displaying and reproducing said message data by using the data in said message display area;
a message data creation supporting area determining step (S194) of determining said message data creation supporting area included in said message data; and
a template data writing step (S57) of writing said message data as template data by using the data in said determined message data creation supporting area.

40. A data processing method comprising:
a receiving step of receiving message data including a message display area for display on a reception side and a template data provider information area describing information specifying a provider of template data used for previous creation;
a storing step of storing said received message data in a storing device;
a data reading step (S91) of reading said message data stored in said storing device;
a message display area determining step (S194) of determining said message display area included in said read message data;
a message reproducing step (S16) of displaying and reproducing said message data by using the data in said message display area;
a template data provider determining step (S192) of determining a provider of the template data used creating said message data by using the data in said template data provider information area;
a template data obtaining step (S13) of obtaining said template data from said provider; and
a message data creating step (S35) of creating the message data by using said obtained template data.

41. A data processing program causing a computer to execute data processing by executing:
a data reading step (S13) of reading template data formed of a message data creation supporting area for creating message data and a message display area for displaying said message data;
a message data creation supporting area determining step (S14) of determining said message data creation supporting area included in said template data; and
a message data editing step (S35) of editing said message data by using data in said message data creation supporting area, wherein
said message data editing step (S35) creates said message data including the message data creation supporting area included in said read template data.

42. A data processing program causing a computer to execute data processing by executing;
a receiving step of receiving message data including a message display area for display on a reception side and a message data creation supporting area used for previous creation;
a storing step of storing said received message data in a storing device;
a data reading step (S191) of reading said message data stored in said storing device;
a message display area determining step (S194) of determining said message display area included in said read message data;
a message reproducing step (S16) of displaying and reproducing said message data by using the data in said message display area; and
a template data writing step (S57) of writing said message data as template data.

43. A data processing program causing a computer to execute data processing by executing:
a receiving step of receiving message data including a message display area for display on a reception side and a message data creation supporting area used for previous creation;
a storing step of storing said received message data in a storing device;
a data reading step (S191) of reading said message data stored in said storing device;
a message display area determining step (194) of determining said message display area included in said read message data;
a message reproducing step (S16) of displaying and reproducing said message data by using the data in said message display area;
a message data creation supporting area determining step (S194) of determining said message data creation supporting area included in said message data; and
a template data writing step (S57) of writing said message data as template data by using the data in said determined message data creation supporting area.

44. A data processing program causing a computer to execute data processing by executing:
a receiving step of receiving message data including a message display area for display on a reception side and a template data provider information area describing information specifying a provider of template data used for previous creation;
a storing step of storing said received message data in a storing device;
a data reading step (S91) of reading said message data stored in said storing device;
a message display area determining step (S194) of determining said message display area included in said read message data;
a message reproducing step (S16) of displaying and reproducing said message data by using the data in said message display area;
a template data provider determining step (S192) of determining a provider of the template data used creating said message data by using the data in said template data provider information area;
a template data obtaining step (S13) of obtaining said template data from said provider; and
a message data creating step (S35) of creating the message data by using said obtained template data
